# EUROPÄISCHE PATENTSCHRIFT

(11) **EP 2 831 989 B1**
(45) Veröffentlichungstag und Bekanntmachung des Hinweises auf die Patenterteilung: **05.05.2021**
(21) Anmeldenummer: 13707141.1
(22) Anmeldetag: 22.02.2013
(51) Int. Cl.: H02M 1/42, H02M 7/06, H02M 7/487

(54) **GLEICHRICHTERSCHALTUNG MIT STROMINJEKTION**
RECTIFIER CIRCUIT WITH CURRENT INJECTION
CIRCUIT REDRESSEUR À INJECTION DE COURANT

(30) Priorität: 30.03.2012 AT 3872012
(43) Veröffentlichungstag der Anmeldung: 04.02.2015
(73) Patentinhaber: Schneider Electric Power Drives GmbH, 1210 Wien (AT)
(72) Erfinder: HARTMANN, Michael, A-1040 Wien (AT); FEHRINGER, Rudolf, A-1230 Wien (AT)
(74) Vertreter: KLIMENT & HENHAPEL
(86) Internationale Anmeldenummer: PCT/EP2013/053532
(87) Internationale Veröffentlichungsnummer: WO 2013/143793

(56) Entgegenhaltungen:
- EP-A1- 1 953 907
- US-A- 5 784 269
- US-A1- 2004 160 789
- J-I ITOH ET AL: "A Novel Three-Phase PFC Rectifier Using a Harmonic Current Injection Method", IEEE TRANSACTIONS ON POWER ELECTRONICS, IEEE SERVICE CENTER, PISCATAWAY, NJ, US, Bd. 23, Nr. 2, 1. März 2008 (2008-03-01), Seiten 715-722, XP011205438, ISSN: 0885-8993
- HYUNJAE YOO ET AL: "A new circuit design and control to reduce input harmonic current for a three-phase ac machine drive system having a very small dc-link capacitor", APPLIED POWER ELECTRONICS CONFERENCE AND EXPOSITION (APEC), 2010 TWENTY-FIFTH ANNUAL IEEE, IEEE, PISCATAWAY, NJ, USA, 21. Februar 2010 (2010-02-21), Seiten 611-618, XP031649808, ISBN: 978-1-4244-4782-4
- KIM S ET AL: "A new approach to improve power factor and reduce harmonics in a three phase diode rectifier type utility interface", INDUSTRY APPLICATIONS SOCIETY ANNUAL MEETING, 1993., CONFERENCE RECORD OF THE 1993 IEEE TORONTO, ONT., CANADA 2-8 OCT. 1993, NEW YORK, NY, USA,IEEE, US, 2. Oktober 1993 (1993-10-02), Seiten 993-1000, XP010118806, DOI: 10.1109/IAS.1993.299019 ISBN: 978-0-7803-1462-7

## Beschreibung

### GEBIET DER ERFINDUNG

Die vorliegende Erfindung bezieht sich auf eine Gleichrichterschaltung mit einer dreiphasigen sechs-pulsigen Gleichrichtanordnung von Gleichrichtventilen, vorzugsweise eine Brückengleichrichterschaltung von Dioden, wobei die Gleichrichtanordnung einen dreiphasigen netzseitigen Eingang und einen gleichstromseitigen Ausgang aufweist, und zumindest eine von drei Phasen am netzseitigen Eingang mit einem ersten Polanschluss einer dreipoligen Schaltung zum Ableiten eines Injektionsstromes in die dreipolige Schaltung verbunden ist, gemäß dem Oberbegriff von Anspruch 1.

Die vorliegende Erfindung bezieht sich weiters auf ein Verfahren zum Einprägen von Steuerströmen in einen gleichstromseitigen Ausgang einer Gleichrichterschaltung mit einer dreiphasigen sechs-pulsigen Gleichrichtanordnung von Halbleiterventilen, vorzugsweise eine dreipolige Brückengleichrichterschaltung von Dioden, wobei ein Injektionsstrom von zumindest einer der drei Phasen an einem netzseitigen Eingang der Gleichrichterschaltung abgezweigt wird, gemäß dem Oberbegriff von Anspruch 18.

### STAND DER TECHNIK

In der modernen Leistungselektronik sind eine Vielzahl an unterschiedlichen Ausführungsformen von passiven, aktiven und Mischformen, sogenannten hybriden Gleichrichterschaltungen bekannt. Die diversen Gleichrichterschaltungen stellen im Wesentlichen aus netzseitigen, sinusförmigen Spannungen am Eingang eine möglichst konstante Gleichspannung am Ausgang der Gleichrichterschaltung bereit. Eine häufig verwendete Gleichrichtanordnung stellt die aus dem Stand der Technik, insbesondere in der Leistungselektronik, bekannte dreiphasige (Sechspuls-) Brückengleichrichtanordnung (B6 Schaltung) von Gleichrichterdioden dar. Dabei wird aus einem dreiphasigen Drehstromnetz (die sogenannte Wechselstromseite der Gleichrichterschaltung) mittels einer Brückenanordnung von Dioden nach der Brückenanordnung (die sogenannte Gleichstromseite der Gleichrichterschaltung) eine gleichgerichtete Spannung erzeugt.

Zur Reduzierung der durch die Gleichrichterschaltung entstehenden pulsförmigen Ströme am wechselspannungsseitigen Eingang des Gleichrichters und zur Glättung der Gleichrichterausgangsspannung bzw. des Gleichrichterausgangsstromes werden oft gleichspannungsseitig Induktivitäten (Drosseln) zwischen Gleichrichterausgang der Diodenbrücke und Ausgangskondensator geschalten. Bei gattungsgemäßen Gleichrichterschaltungen wird der Gleichrichterstrom durch eine Drossel, verbunden mit einem Ausgangskondensator parallel zum Ausgang, geführt, um Verzerrungen in den Netzströmen zu reduzieren, und den Verlauf des Gleichrichterstroms zu glätten und eine konstante Ausgangsspannung am Ausgang bzw. dem Ausgangskondensator zur Verfügung zu stellen.

Der netzseitige Stromverlauf einer Gleichrichterschaltung mit Schaltelementen, Induktivitäten und/oder Kapazitäten, auch im Betrieb mit passiver (ohmscher) Last oder einer weiteren elektronischen Schaltung an der Gleichspannungsseite, ist dabei in herkömmlicher Weise nicht sinusförmig. Die nicht-sinusförmigen Ströme verursachen infolge ihres Oberschwingungsgehalts und der Phasenverschiebung gegenüber der Netzgrundschwingung unerwünschte netzseitige Spannungs- bzw. Stromverzerrungen. Insbesondere bei Gleichrichterschaltungen höherer Leistung sind diese Netzrückwirkungen nicht zu vernachlässigen. Es gilt einen Pegel der summierten Leistung aller Oberschwingungen im Verhältnis zur Leistung der Grundschwingung einzuhalten (THDi, steht für "Total Harmonic Distortion of currents" bzw. "gesamte harmonische Verzerrung der Ströme"), wobei die maximalen Verzerrungen der Netzströme und Netzspannungen durch Normen (z.B. IEC61000-3-2) vorgegeben ist.

Aus dem Stand der Technik ist bekannt, dass die Stromformen der Gleichrichterschaltung durch Hinzufügen bzw. Ableiten von Strömen, den sogenannten Injektionsströmen, beeinflusst werden können. Dabei werden durch zusätzlich angeordnete Schaltelemente Ströme vorzugsweise in den stromlosen Phasen der Diodenbrückenströme zusätzlich eingeprägt. Der dazu benötigte Strom besitzt im Wesentlichen eine zur Netzfrequenz dreifache Frequenz wodurch diese Art der Strominjektion zur Verbesserung der durch die Gleichrichterschaltung erzeugenden Netzrückwirkungen in der Literatur mit *third harmonic current injection* bezeichnet wird. Als bekanntester Vertreter solch eines Gleichrichtersystems und Stand der Technik sei hier der sogenannte *Minnesota Rectifier* genannt.

Die im Stand der Technik als *Minnesota Rectifier* bekannte Gleichrichterstruktur verwendet eine Injektion eines Stromes mit einer dritten harmonischen der Netzfrequenz simultan in alle drei Phasen des Wechselstromanschlusses der Gleichrichterschaltung um annähernd sinusförmige Netzströme der Gleichrichterschaltung zu erreichen. Es werden dadurch jene Stromlücken gefüllt, welche aufgrund der sperrenden Wirkung der Gleichrichtanordnung am netzseitigen Eingang keinen Strom führen würden. Durch geeignete Wahl des Injektionsstromes kann die Verzerrung der Netzströme somit weitestgehend vermieden und somit ein besseres THDi erreicht werden.

Die Schaltung des *Minnesota Rectifiers* zeigt den wesentlichen Nachteil, dass die dazu notwendigen Ströme in alle drei Phasen gleichzeitig eingeprägt werden und dabei niederfrequent belastete Einspeisetransformatoren verwendet werden müssen welche aufgrund der niederfrequenten Belastung mit der dritten harmonischen der Netzfrequenz sowohl ein großes Volumen als auch ein großes Gewicht aufweisen. Die Erzeugung des Injektionsstromes wird bei der Schaltung des Minnesota Rectifiers durch zwei, gleichspannungsseitig angeordneten Hochsetzstellerstufen bewerkstelligt. Dadurch kann eine geregelte Ausgangsspannung, welche durch einen hinreichend großen Ausgangskondensator gefiltert ist, zur Verfügung gestellt werden. Durch die Anwendung der Hochsetzsteller auf der DC-Seite des Gleichrichters werden jedoch zwei Dioden in den primären Leistungsfluss der Gleichrichterschaltung eingefügt, was insbesondere im Bereich hoher Leistungen eine beträchtliche Reduzierung des Wirkungsgrades zur Folge hat. Eine selektive Einprägung des benötigten Injektionsstromes nur in diejenige wechselspannungsseitige Phase, welche im klassischen 6-puls Gleichrichterbetrieb stromlos bleiben würde ist möglich, benötigt jedoch zusätzliche aktive Schalter zur Auswahl der jeweiligen Phase. Dazu muss der Injektionsstrom des Gleichrichterschaltung jedoch angepasst werden. Solch ein Betrieb ist jedoch mit der Topologie des *Minnesota Rectifiers* nicht möglich. Eine vergleichbare Ausführung wurde in der Publikation "A Novel Three-Phase PFC Rectifier Using a Harmonie Current Injection Method" von Jun-Ichi Itoh et al. beschrieben.

Andere aus dem Stand der Technik bekannte Gleichrichterschaltungen, welche das Konzept der third harmonic injection verwenden, können nur parallel zur Last der Gleichrichterschaltung und ohne Verwendung der gleichspannungsseitigen Drossel bzw. ohne der Verwendung eines nennenswerten Ausgangskondensators betrieben werden. Bei solch bestehenden Schaltungen wird, um annähernd sinusförmigen Strom zu erhalten, sowohl die pulsierende Ausgangsspannung des Brückengleichrichters als auch eine Konstantleistungslast, also eine Last die unabhängig von der zur Verfügung gestellten Spannungen die benötigte Leistung aufnimmt, benötigt. Gleichrichterschaltungen mit technisch vorteilhafter Drossel und Kapazität am gleichstromseitigen Ausgang können daher nicht verwendet werden können. Für den Betrieb von vielen leistungselektronischen Schaltungen ist eine hinreichend gute Glättung und Stützung der Ausgangsspannung und daher ein hinreichend großer Ausgangskondensator unerlässlich. Topologien dieser Art können daher in solchen Anwendungen nicht eingesetzt werden. Weitere Topologien sind etwa in der Publikation "A New Circuit Design and Control to Reduce Input Harmonic Current for a Three-phase AC Machine Drive System having a very small DC-link Capacitor" der Autoren Hyunjae Yoo et al. beschrieben.

Weitere Gleichrichterschaltungen wurden in der US 5,784,269 A, EP 1 953 907 A1, US 2004/160789 A1 sowie in der Publikation "A New Approach to Improve Power Factor and Reduce Harmonics in a Three Phase Diode Rectifier Type Utility Interface" der Autoren Kim S. et al. beschrieben.

Eine wesentliche, möglichst optimale Gleichrichtung bei gleichzeitiger Vermeidung der Netzverzerrungen ist also bei im Stand der Technik bekannten Gleichrichterschaltungen mit Strominjektion nicht gegeben.

### AUFGABE DER ERFINDUNG

Es ist daher das Ziel dieser Erfindung diese Nachteile zu vermeiden und eine Gleichrichterschaltung mit Strominjektion sowie ein Verfahren zum Einprägen von Steuerströmen in jener Weise zu verbessern, dass geringe Netzrückwirkungen der Gleichrichterschaltung auftreten, wobei dabei ein möglichst sinusförmiger Eingangsstrom in Phase mit den jeweiligen Netzspannungen vorliegen soll, keine großen magnetische Bauelemente an der Wechselspannungsseite der Gleichrichterschaltung benötigt werden, pulsförmige Injektion des Steuerstroms an den Ausgang der Gleichrichterschaltung vermieden wird, keine großen wechselspannungs- bzw. gleichspannungsseitigen angeordneten Filterkondensatoren benötigt werden, und der Wirkungsgrad der Gleichrichterschaltung verbessert wird.

### DARSTELLUNG DER ERFINDUNG

Diese Ziele werden durch die Merkmale von Anspruch 1 und Anspruch 18 erreicht.

Anspruch 1 bezieht sich auf eine Gleichrichterschaltung mit einer dreiphasigen sechs-pulsigen Gleichrichtanordnung von Halbleiterventilen, vorzugsweise einer Brückengleichrichterschaltung von Dioden, mit einer Last, wobei die Gleichrichtanordnung einen dreiphasigen netzseitigen Eingang und einen drei Schaltelemente und eine dreipolige Schaltung umfassenden gleichstromseitigen Ausgang aufweist, und jede Phase des netzseitigen Eingangs jeweils mit einem Schaltelement zu einem ersten Polanschluss der dreipoligen Schaltung zum Ableiten eines Injektionsstromes in die dreipolige Schaltung zuschaltbar ist, und ein zweiter und dritter Polanschluss der dreipoligen Schaltung jeweils mit einer Ausgangsleitung des gleichstromseitigen Ausganges für Steuerströme verbunden ist. Erfindungsgemäß ist vorgesehen, dass die dreipolige Schaltung als Regelungsschaltung zur aktiven, voneinander unabhängigen Regelung von zumindest zwei der durch Steuerströme und Injektionsstrom gegebenen drei Ströme zur Erzeugung sinusförmiger Gleichrichtereingangsströme ausgelegt ist und steuerbare Halbleiterventile, vorzugsweise IGBTs, zur aktiven Regelung von zumindest zwei der durch Steuerströme und Injektionsstrom gegebenen drei Ströme aufweist, sowie eine Drossel an einer der Ausgangsleitungen des gleichstromseitigen Ausganges zwischen dem zweiten Polanschluss und der Last oder zwischen dem dritten Polanschluss und der Last am gleichstromseitigen Ausgang angeordnet ist, und die Last am gleichstromseitigen Ausgang eine zeitlich veränderliche Last ist, wobei die Regelungsschaltung zur Zuführung des Injektionsstroms nur in diejenige Phase, die aufgrund des Betriebes der sechs-pulsigen Gleichrichtanordnung stromlos bleibt, ausgelegt ist.

Die erfindungsgemäße Schaltung weist neben der bekannten Gleichrichtanordnung eine dreipolige Schaltung zum Einprägen von Injektionsströmen auf. Jede einzelne Phase des Netzes kann mittels Schaltelement mit der dreipoligen Schaltung verbunden werden, wobei dabei der sogenannte Injektionsstrom vom Netz entnommen wird und den Gleichrichterströmen als Steuerstrom hinzugefügt wird. Die erfindungsgemäße Schaltung ermöglicht den Betrieb mit veränderlichen Lasten am gleichstromseitigen Ausgang der Gleichrichterschaltung, da die Steuerströme aus der dreipoligen Schaltung mithilfe von steuerbaren Halbleiterventilen als aktive Bauelemente zur aktiven Regelung in der dreipoligen Schaltung je nach Last geregelt werden können. Passive Bauelemente wie Widerstände, Kondensatoren oder Induktivitäten, wie sie in herkömmlichen Schaltungstopologien von Gleichrichterschaltungen unter der Verwendung des Injektionsprinzips eingesetzt werden, sind dazu nicht in ausreichender Form geeignet. Als aktive Bauelemente sind vorzugsweise steuerbare Halbleiterventile in Form von IGBTs mit antiparallelen Freilaufdioden vorgesehen, wobei jedoch jegliche Art von abschaltbaren Ventilen, welche zur Steuerung der Schaltzustände (z.Bsp. MOSFETs, GTOs,...) verwendet werden können. In der Beschreibung der vorliegenden Erfindung wird der Begriff steuerbare Halbleiterventile stellvertretend für alle steuerbaren Schaltelemente verwendet.

Auch die Verwendung einer gleichstromseitigen Drossel in Kombination mit einem hinreichend großen Ausgangskondensator zum Erhalt gleichgerichteter, konstanter Ausgangsspannungen ist möglich, ohne dabei die Funktion der Gleichrichterschaltung zu beeinträchtigen und hohe Netzverzerrungen zu erhalten. Die gesamte Leistung der Gleichrichterschaltung wird dabei am gleichstromseitigen Ausgang durch die Drossel geführt. Eine durch die Gleichrichtanordnung entstehende Spannung mit wechselförmigen Anteilen kann an der Drossel abfallen, wobei eine gleichgerichtete Spannung am Ausgang verbleibt und der Last zugeführt werden kann. Insbesondere können herkömmliche Gleichrichterschaltungen mit Drossel und Ausgangskondensator mittels der dreipoligen Schaltung einfach erweitert werden.

Gemäß einer weiteren bevorzugten Ausführungsform der Erfindung ist vorgesehen, dass der zweite und dritte Polanschluss der dreipoligen Schaltung jeweils über eine zweite und dritte Induktivität mit einer der beiden Ausgangsleitungen des gleichstromseitigen Ausganges verbunden ist, und zwischen dem zweiten oder dritten Polanschluss und der Last die Drossel vorgesehen ist.

Eine Differenzspannung an den Induktivitäten bildet die Basis für die Regelung der Steuerströme und des Injektionsstroms. Die jeweiligen Ströme, also die Steuerströme und/oder der Injektionstrom, werden durch Modulation der aktiven Bauelemente in der dreipoligen Schaltung eingestellt. Die Schaltvorgänge zur Modulation von Strömen mittels aktiver Bauelemente sind in der Leistungselektronik an sich bekannt. Durch die Induktivitäten an den Anschlüssen der dreipoligen Schaltung werden die Ströme geglättet und eine Einprägung von pulsförmigen Strömen in den gleichstromseitigen Ausgang kann vermieden werden. Dadurch werden mitunter teure Filterkondensatoren mit großen Kapazitätswerten gespart, die die pulsförmigen Ströme entstehend durch den Schaltvorgang der aktiven Bauelemente in herkömmlicher Weise aufnehmen würden. Die Drossel am gleichstromseitigen Ausgang führt sowohl die Gleichrichterströme als auch die eingeprägten Steuerströme und sorgt für kontinuierliche Verläufe der Ausgangsgrößen.

In einer weiteren bevorzugten Ausführungsform der Erfindung ist vorgesehen, dass über eine erste Induktivität der erste Polanschluss mit den Schaltelementen verbunden ist, wobei die drei Induktivitäten mittels 3-Schenkel-Drossel ausgeführt sind. Die Ausführung der drei Induktivitäten mittels einer herkömmlichen 3-Schenkel-Drossel stellt eine besonders platzsparende, günstige und einfach zu implementierende Variante dar, wobei jede Schenkelwicklung der 3-Schenkel-Drossel eine Induktivität bildet.

Gemäß einer weiteren Ausführungsform der erfindungsgemäßen Gleichrichterschaltung ist vorgesehen, dass die beiden Ausgangsleitungen am gleichstromseitigen Ausgang mit einem Ausgangskondensator verbunden sind. Dieser Ausgangskondensator dient im Wesentlichen zum Erhalt einer konstanten Ausgangsspannung in Zusammenspiel mit der Drossel, wobei ein vorhandener wechselförmiger Anteil in der Spannungsschleife zwischen Drossel und Ausgangskondensator an der Drossel abfällt, und der Ausgangskondensator eine konstante, gleichgerichtete Ausgangsspannung hält. Ein Ausgangskondensator parallel zum Ausgangsanschluss der Gleichrichterschaltung wird unter anderem auch durch den nachgeschalteten Betrieb von leistungselektronischen Schaltungen wie z.B. einer dreiphasigen Inverterstufe benötigt.

In einer weiteren bevorzugten Ausführungsform der Erfindung ist vorgesehen, dass jede der drei Phasen am netzseitigen Eingang jeweils mit einem Filterkondensator verbunden ist, wobei die Filterkondensatoren sternförmig in einem Sternpunkt zusammengeschaltet sind. Des Weiteren ist vorgesehen, dass die dreipolige Schaltung über zumindest einen Ableitkondensator mit dem netzseitigen Eingang verbunden ist. Der Ableitkondensator der dreipoligen Schaltung bildet in Kombination mit den sternförmig angeordneten Filterkondensatoren einen vorteilhaften Strompfad um Ströme, entstehend durch hochfrequente Schaltvorgänge in der dreipoligen Schaltung, abzuleiten.

Des Weiteren ist gemäß einer weiteren bevorzugten Ausführungsform der Erfindung vorgesehen, dass die dreipolige Schaltung drei Konvertersysteme mit steuerbaren Halbleiterventilen und/oder einem bidirektionalem Schalter umfasst, wobei an einem ersten Konvertersystem der erste Polanschluss der dreipoligen Schaltung, an einem zweiten Konvertersystem der zweite Polanschluss der dreipoligen Schaltung, sowie an einem dritten Konvertersystem der dritte Polanschluss der dreipoligen Schaltung vorgesehen ist, und von allen drei Konvertersystemen eine Verbindung zu einem Verzweigungspunkt, einem gemeinsamen Mittelpunkt der dreipoligen Schaltung, vorgesehen ist.

Die drei Konvertersysteme werden verwendet um bei entsprechender Regelung die beiden Steuerströme und den Injektionsstrom einzuprägen. Jedes der Konvertersysteme stellt einen Freiheitsgrad für die Regelung der drei Ströme, nämlich den beiden Steuerströmen und dem Injektionsstrom, zur Verfügung. Mittels der vorteilhaften Ausführung von steuerbaren Halbliterventilen und/oder eines bidirektionalen Schalters in einer Brückenstruktur können die Freiheitsgrade dazu genutzt werden die Steuerströme zu regeln.

Des Weiteren ist gemäß einer bevorzugten Ausführungsform der Erfindung vorgesehen, dass das erste Konvertersystem als 3-Level Brückenzweig vorgesehen ist, wobei das zweite und dritte Konvertersystem als Halbbrücke vorgesehen sind, und die drei Konvertersysteme mittels dreier parallel geschalteter Zweige ausgeführt sind, die mit elektronischen Bauelementen besetzt sind, wobei an einem ersten Zweig der erste Polanschluss der dreipoligen Schaltung ausgeführt ist, und an einem dritten Zweig der zweite und dritte Polanschluss ausgeführt sind, und jeder der Zweige einen Mittelpunktanschluss aufweist, um welche Mittelpunktanschlüsse die Bauelemente der Zweige symmetrisch angeordnet sind, wobei ein erster Mittelpunktanschluss des ersten Zweigs über einen bidirektionalen Schalter mit einem zweiten Mittelpunktanschluss des zweiten Zweigs verbunden ist, und der zweite Mittelpunktanschluss direkt mit einem dritten Mittelpunktanschluss des dritten Zweigs leitend verbunden ist, wobei der dritte Mittelpunktanschluss als Mittelpunkt der dreipoligen Schaltung vorgesehen ist. Das erste Konvertersystem ist als an sich bekannter 3-Level Brückenzweig ausgeführt, und kann unidirektional oder bidirektional vorgesehen sein, wie im Weiteren erläutert werden wird. Die Konvertersysteme zwei und drei, bestehen aus zwei Halbbrücken können jedoch auch als drei- oder mehrstufigen Brückenzweig ausgeführt sein.

Am ersten Zweig ist der erste Polanschluss vorgesehen und der Injektionsstrom fließt in den ersten Mittelpunktanschluss und damit in die dreipolige Schaltung zu. Die drei derartig parallel geschalteten Zweige stellen gemeinsam die drei Konvertersysteme als Brückenstrukturen dar, mit welchen Brückenstrukturen die Steuerströme und der Injektionsstrom geregelt werden können.

Alternativ ist gemäß einer weiteren bevorzugten Ausführungsform der Erfindung vorgesehen, dass die dreipolige Schaltung zwei Konvertersysteme mit steuerbaren Halbleiterventilen, vorzugsweise angeordnet in einer Brückenstruktur, umfasst, wobei an einem zweiten Konvertersystem der zweite Polanschluss der dreipoligen Schaltung, sowie an einem dritten Konvertersystem der dritte Polanschluss der dreipoligen Schaltung vorgesehen ist, und von beiden Konvertersystemen eine Verbindung zu einem Verzweigungspunkt, einem gemeinsamen Mittelpunkt, vorgesehen ist, und der Mittelpunkt mit dem ersten Polanschluss verbunden ist. Gemäß dieser alternativen Ausführungsform der Erfindung wird das erste Konvertersystem weggelassen und der erste Pol der dreipoligen Schaltung wird direkt mit dem Mittelpunkt der beiden verbleibenden Konvertersysteme leitend verbunden.

Gemäß einer weiteren bevorzugten Ausführungsform der Erfindung ist vorgesehen, dass das zweite und dritte Konvertersystem als Halbbrücke vorgesehen sind, wobei die zwei Konvertersysteme mittels zweier parallel geschalteter Zweige ausgeführt sind, und mit einem zweiten Zweig der erste Polanschluss der dreipoligen Schaltung verbunden ist, und an einem dritten Zweig der zweite und dritte Polanschluss ausgeführt sind, und jeder der Zweige einen Mittelpunktanschluss aufweist, um welche Mittelpunktanschlüsse die Bauelemente der Zweige symmetrisch angeordnet sind, und ein zweiter Mittelpunktanschluss des zweiten Zweigs direkt mit einem dritten Mittelpunktanschluss des dritten Zweigs leitend verbunden ist, wobei der dritte Mittelpunktanschluss als Mittelpunkt der dreipoligen Schaltung vorgesehen ist. Gemäß dieser Ausführungsform der dreipoligen Schaltung ist kein erster Zweig vorgesehen, der mittels Schalter verbunden ist, sondern nur eine Ausführungsform mit zwei Halbbrücken als Konvertersysteme, womit zwei Freiheitsgrade zur Regelung der Spannungs- und Stromgrößen der Brückenstrukturen vorhanden sind. Die direkte Verbindung des ersten Pols der dreipoligen Schaltung mit dem Mittelpunkt der dreipoligen Schaltung und damit auch der beiden Konvertersysteme definiert das Potential an ebendiesem Punkt und sowohl die beiden Steuerströme als auch der Injektionsstrom können mit den zwei verbleibenden Konvertersystemen geregelt werden.

Zur Bauteilbestückung der Zweige ist gemäß einer weiteren bevorzugten Ausführungsform vorgesehen, dass am zweiten Zweig zwei Pufferkondensatoren in Serie geschaltet sind, wobei der zweite Mittelpunktanschluss zwischen den beiden Pufferkondensatoren angeordnet ist. Des Weiteren ist gemäß einer bevorzugten Ausführungsform vorgesehen, dass im ersten Zweig zwei Brückenventile, vorzugsweise Dioden, in Serie mit derselben Durchlassrichtung geschaltet sind, wobei der erste Mittelpunktanschluss zwischen den beiden Brückenventilen angeordnet ist. Eine derartige Anordnung von Dioden bedeutet eine unidirektionale Ausführung des ersten Konvertersystems. Eine unidirektionale Ausführung des ersten Konvertersystems erlaubt eine Stromführung aufgrund der Dioden nur in eine Richtung, womit ein Energietransfer vom Netz in die dreipolige Schaltung festgelegt ist. Gemäß einer weiteren bevorzugten Ausführungsform ist vorgesehen, dass die beiden Brückenventile als steuerbare Halbleiterventile, vorzugsweise IGBTs, ausgeführt sind. Eine derartige Anordnung von steuerbaren Halbleiterventilen anstatt von Dioden bedeutet eine bidirektionale Ausführung des ersten Konvertersystems. Eine bidirektionale Ausführung des ersten Konvertersystems erlaubt es, bei geeigneter Regelung der drei Konvertersysteme die Spannung an den Pufferkondensatoren zu minimieren, da die benötigten Ströme in der dreipoligen Schaltung nun nicht mehr durch die Flussrichtung der Brückenventile des ersten Konvertersystems begrenzt ist. Dadurch kann die maximale Spannung der Pufferkondensatoren vorteilhaft reduziert werden.

Gemäß einer weiteren bevorzugten Ausführungsform ist vorgesehen, dass am dritten Zweig die vier steuerbaren Halbleiterventile in Serie geschaltet vorgesehen sind, wobei der Mittelpunkt der dreipoligen Schaltung in der Verbindung zwischen zwei seriell geschalteten Paaren der steuerbaren Halbleiterventile angeordnet ist, und der zweite Polanschluss zwischen den steuerbaren Halbleiterventilen des ersten Paars vorgesehen ist, und der dritte Polanschluss zwischen den steuerbaren Halbleiterventilen des zweiten Paars vorgesehen ist. An diesen Polanschlüssen fließen die Steuerströme in die gleichstromseitigen Ausgangsleitungen. Die jeweiligen Steuerströme können nun durch die beiden Halbbrücken durch geeignete Ansteuerung der steuerbaren Halbleiterventile reguliert werden. Die Spannungen der verwendeten Pufferkondensatoren sind dabei maßgeblich für die Spannungsverhältnisse am zweiten und dritten Polanschluss und daher auch maßgeblich für den auftretenden Rippelstrom in den Induktivitäten.

Gemäß einer weiteren bevorzugten Ausführungsform der Erfindung ist vorgesehen, dass der zweite Mittelpunktanschluss über eine Spannungsquelle mit dem ersten Polanschluss verbunden ist. Der zweite Mittelpunktanschluss ist direkt verbunden mit dem Mittelpunkt. Um das Potential des Mittelpunktes der dreipoligen Schaltung dynamisch erhöhen bzw. erniedrigen zu können, kann der Mittelpunkt der Konvertersysteme über eine Spannungsquelle mit dem ersten Polanschluss verbunden werden. Mithilfe einer Potentialerhöhung bzw. -erniedrigung durch die Spannungsquelle können die Ströme der dreipoligen Schaltung auch bei geringen Potentialdifferenzen, wie sie prinzipbedingt bei der direkten Verbindung des ersten Polanschlusses mit dem Mittelpunkt der Konvertersysteme auftreten, ohne Verzerrungen geregelt werden.

In einer weiteren Ausführungsform der erfindungsgemäßen Gleichrichterschaltung ist vorgesehen, dass das zweite und dritte Konvertersystem der dreipoligen Schaltung mit an sich bekannten bidirektionalen 3-Level Brückenzweigen ausgeführt ist, vorzugsweise zwei sogenannte Three-Level Neutral-Point-Clamped-Converters (3L-NPC), wobei die 3-Level Brückenzweige symmetrisch um einen zu den 3-Level Brückenzweigen parallel geschalteten Mittelpunktzweig angeordnet sind, und der Mittelpunktzweig als zwei in Serie geschaltete Pufferkondensatoren ausgeführt ist, sowie der Mittelpunkt zwischen den beiden Pufferkondensatoren vorgesehen ist, und ein Neutralanschluss des 3-Level Brückenzweigs mit dem Mittelpunkt und dem ersten Polanschluss verbunden ist, sowie ein Wechselspannungsanschluss des 3-Level Brückenzweigs als der zweite Polanschluss und der dritte Polanschluss der dreipoligen Schaltung vorgesehen sind. Die Verwendung zweier 3-Level Brückenzweige stellt eine besonders vorteilhafte Ausführung der Erfindung dar, da das erste Konvertersystem in dieser Ausführungsform nicht benötigt wird und dadurch der Wirkungsgrad des gesamten Gleichrichtersystems erhöht werden kann und außerdem die Steuerströme möglichst verzerrungsfrei generiert werden können. Die Regelung der Steuerströme kann durch an sich bekannte Ansteuerung der steuerbaren Halbleiterventile der 3-Level Brückenzweig bewerkstelligt werden und der Injektionsstrom ergibt sich dabei durch den Umstand i_{cp}=iₕ₃+i_{cn}. Die beschriebene Ausführungsform stellt eine bidirektionale dreipolige Schaltung zur Verfügung.

Gemäß einer weiteren bevorzugten Ausführungsform der Erfindung ist vorgesehen, dass die dreipolige Schaltung mit dem ersten Polanschluss jeweils mit einer Seite von zwei Injektionskondensatoren verbunden ist, welche Verbindung den Mittelpunkt der dreipoligen Schaltung bildet, wobei die beiden anderen Seiten der Injektionskondensatoren über eine Spannungsquelle verbunden sind und Anschlusspunkte bilden, wobei jeweils von den Anschlusspunkten ausgehend eine Stromschleife mit je einem Pufferkondensator und jeweils ein Paar von steuerbaren Halbleiterventilen vorgesehen ist, und zwischen den jeweils zwei steuerbaren Halbleiterventilen eines Paares der zweite Polanschluss und der dritte Polanschluss vorgesehen ist. Die Regelung der Steuerströme erfolgt nach wie vor durch geeignete Ansteuerung der beiden Halbbrücken. Bei genügend hoher Amplitude der Spannungen der zusätzlichen Spannungsquelle können durch diese Ausführung die beiden Steuerströme weitestgehend verzerrungsfrei geführt werden.

Anspruch 18 bezieht sich auf ein Verfahren zum Einprägen von Steuerströmen in einen drei Schaltelemente und eine dreipolige Schaltung umfassenden gleichstromseitigen Ausgang einer Gleichrichterschaltung gemäß Anspruch 1 mit einer dreiphasigen sechs-pulsigen Gleichrichtanordnung von Halbleiterventilen, vorzugsweise eine dreipolige Brückengleichrichterschaltung von Dioden, mit einer Last, wobei ein Injektionsstrom von zumindest einer der drei Phasen an einem netzseitigen Eingang der Gleichrichterschaltung abgezweigt wird. Erfindungsgemäß ist vorgesehen, dass der Injektionsstrom einem ersten Polanschluss der dreipoligen Schaltung zugeführt wird, und eine aktive, voneinander unabhängige Regelung von zumindest zwei der durch Steuerströme und Injektionsstrom gegebenen drei Ströme zur Erzeugung sinusförmiger Gleichrichtereingangsströme mithilfe von aktiven Bauelementen, vorzugsweise steuerbaren Halbleiterventilen, in der dreipoligen Schaltung erfolgt, wobei die Zuführung des Injektionsstroms nur in diejenige Phase erfolgt, die aufgrund des Betriebes der sechs-pulsigen Gleichrichtanordnung stromlos bleibt, sowie den Gleichrichterströmen an zwei gleichstromseitigen Ausgangsleitungen des gleichstromseitigen Ausganges jeweils ein Steuerstrom über einen zweiten und dritten Polanschluss der dreipoligen Schaltung hinzugefügt wird, und einer der Gleichrichterströme mit dem ihm jeweils zugeführten Steuerstrom durch eine zwischen dem zweiten Polanschluss und der Last oder zwischen dem dritten Polanschluss und der Last am gleichstromseitigen Ausgang angeordnete Drossel geführt wird. Der Drosselstrom setzt sich aus von der Gleichrichtanordnung gleichgerichteten Strom und Steuerströmen zusammen. Die Drossel in Kombination mit dem Ausgangskondensator glättet den Ausgangsstrom und stellt eine konstante Ausgangsspannung zur Verfügung. Die Zuführung des Injektionsstromes erfolgt nur in diejenige Phase die aufgrund des Betriebes der sechs-pulsigen Gleichrichtanordnung stromlos bleiben würden und ermöglicht bei entsprechender Regelung die Erzeugung von sinusförmigen Gleichrichtereingangsströmen in Phase mit den Netzspannungen was die Netzrückwirkungen der Gleichrichterstruktur erniedrigt. Da die zusätzlich eingebrachte dreipolige Schaltung nur einen Bruchteil der Energie der gesamten Gleichrichterschaltung bearbeitet, kann im Wesentlichen ein besserer Gesamtwirkungsgrad im Vergleich zu herkömmlichen rückwirkungsarmen, aktiven Gleichrichterschaltungen erzielt werden. Insbesondere bietet das erfindungsgemäße Verfahren die Möglichkeit, bestehende herkömmliche Gleichrichterschaltungen zu erweitern und diese mit der Erweiterung rückwirkungsarm am Netz zu betreiben. Ebenso ist es möglich, eine variable Last am gleichstromseitigen Ausgang zu betreiben, indem die Steuerströme je nach Last mit an sich bekannter Ansteuerung der aktiven Bauelemente geregelt werden.

Gemäß einer weiteren bevorzugten Ausführungsform der Erfindung ist vorgesehen, dass der Injektionsstrom und/oder die Steuerströme durch zumindest zwei von drei Induktivitäten, vorgesehen an zumindest zwei der drei Polanschlüsse zur Glättung und Steuerung der Ströme, durch Differenzspannungen über den Induktivitäten geführt werden, sowie mittels Regelung von zwei der drei Ströme der dritte Strom eingestellt wird.

Mit dem erfindungsgemäßen Verfahren ist es möglich Gleichrichterschaltungen mit geringen Netzverzerrungen zu betreiben. Die zugeführten Steuerströme sowie der Injektionsstrom werden zunächst von den Induktivitäten geglättet, ohne dabei pulsförmige Ströme von der Gleichrichtanordnung am Ausgang zu erhalten. In gattungsgemäßen Gleichrichterschaltungen übliche, große Kapazitäten zur Filterung der Pulse der Gleichrichtströme sowie eventueller Injektionsströme werden dabei vermieden. Des Weiteren ist die Differenzspannung über den Induktivitäten die Basis, um Ströme durch die Induktivitäten zu führen und damit in die dreipolige Schaltung bzw. aus dieser zu führen. Die Stromsumme der Ströme an den Polanschlüssen der dreipoligen Schaltung der erfindungsgemäßen Gleichrichterschaltung ergibt sich zu null. Hochfrequente Schaltvorgänge der aktiven Bauelemente in der dreipoligen Schaltung resultieren, insbesondere wenn alle drei Ströme an den Polanschlüssen geregelt werden, in hochfrequenten Bewegungen einer Mittelpunktspannung der dreipoligen Schaltung. Durch Verwenden zusätzlicher Ableitkondensatoren kann ein zusätzlicher hochfrequenter Strompfad bereitgestellt werden. Bei der gegenständlichen Ausführungsform ist allerdings vorgesehen, dass zwei der drei Ströme an den Polanschlüssen mithilfe aktiver Bauelemente in der dreipoligen Schaltung geregelt werden, wobei sich der dritte Strom aufgrund der Stromsumme null ergibt.

Gemäß einer weiteren bevorzugten Ausführungsform des erfindungsgemäßen Verfahrens ist vorgesehen, dass eine Mittelpunktspannung zwischen dem Mittelpunkt der dreipoligen Schaltung und einem Neutralpunkt gemessen wird und ein Mittelwert der Mittelpunktspannung mit einem der Konvertersysteme geregelt wird. Die Messung und Filterung der Mittelpunktspannung, wobei die Mittelpunktspannung in Bezug auf den Neutralpunkt (Masse) des Netzes gemessen wird, erlaubt die aktive Regelung dieses Potentials, was Vorteile bei der Generierung der Steuerströme und des Injektionsstromes mit sich bringt, da dieses Potential die Steuerströme bzw. den Injektionsstrom mitbestimmt. Dabei wird die Potentialdifferenz, insbesondere jene zwischen dem Mittelpunkt und dem gleichstromseitigen Ausgangsleitungen und dem netzseitigem Eingang, mithilfe der aktiven Bauelemente in der dreipoligen Schaltung geregelt.

In einer weiteren bevorzugten Ausführungsform der Erfindung ist vorgesehen, dass die erste Pufferkondensatorspannung am Pufferkondensator größer geregelt wird als eine Spannung der positiven Ausgangsleitung gegen einen Neutralpunkt, und eine zweite Pufferkondensatorspannung am Pufferkondensator kleiner geregelt wird als eine Spannung der negativen Ausgangsleitung gegen den Neutralpunkt. Die Pufferkondensatorspannungen bestimmen beim Schalten der steuerbaren Halbleiterventile die Differenzspannungen an den Induktivitäten der Polanschlüsse.

Gemäß einer weiteren bevorzugten Ausführungsform ist vorgesehen, dass die Regelung des Mittelwerts der Mittelpunktspannung mittels der steuerbaren Halbleiterventile erfolgt. Gemäß einer bevorzugten Ausführungsform der Erfindung ist vorgesehen, dass der Mittelwert der Mittelpunktspannung auf null geregelt wird.

Aufgrund des Umstandes, dass sich die Summe aller drei Ströme der dreipoligen Schaltung zwingend zu null ergeben müssen, ist es ausreichend, wenn nur zwei Konvertersysteme zur Regelung der Steuerströme und des Injektionsstromes verwendet werden, da sich der dritte Strom zwingend ergibt. Dadurch kann in vorteilhafter Weise das übrig bleibende Konvertersystem verwendet werden, um die Mittelpunktsspannung im Mittel zu regeln. Wegen der zeitlichen Modulation, also Schaltung, der steuerbaren Halbleiterventile ist der Mittelwert der Mittelpunktspannung heranzuziehen. Der Mittelwert der Mittelpunktspannung kann mittels der aktiven Bauelemente in der dreipoligen Schaltung geregelt werden. Die Methoden zur Ansteuerung der aktiven Bauelemente bzw. Änderung deren Schaltzuständen ist dabei an sich bekannt. Wird die Mittelpunktspannung im Mittel auf null im Bezug auf den Neutralpunkt des Netzes geregelt, müssen die Beträge der jeweiligen Spannungen an den Pufferkondensatoren größer bzw. kleiner sein als jene an den gleichstromseitigen Ausgangsleitungen gegenüber diesem Mittelpunkt entsprechend eingeprägt werden können. Gemäß einer weiteren Ausführungsform des erfindungsgemäßen Verfahrens ist vorgesehen, dass eine erste Pufferkondensatorspannung am Pufferkondensator minimiert wird, und eine zweite Pufferkondensatorspannung am Pufferkondensator minimiert wird, wobei die Mittelpunktspannung auf den negativen halben Wert einer Injektionsspannung geregelt wird, und die Injektionsspannung zwischen dem ersten Polanschluss und dem Neutralpunkt anliegt. Die Spannungen der beiden Pufferkondensatoren werden dabei minimiert, wobei die Mittelpunktspannung gegengleich zur am ersten Polanschluss der dreipoligen Schaltung auftretenden Spannung gegen den Neutralpunkt, geregelt werden muss. Dazu ist jedoch eine bidirektionale Ausführung der ersten Konverterstufe nach Anspruch 15 notwendig, da Strom und Spannung dieses Konvertersystens bei dieser Ausführungsform nicht in Phase sind.

In einer weiteren bevorzugten Ausführungsform des erfindungsgemäßen Verfahrens ist für Gleichrichterschaltungen nach Anspruch 11 oder 17 vorgesehen, dass mithilfe der Regelung der Spannungsquelle das Potential der Mittelpunktspannung gegenüber einer der beiden Ausgangsleitungen erhöht bzw. erniedrigt wird. Dies ist vorgesehen, um ausreichend große Potentialdifferenzen zur Regelung der Steuerströme an den Polanschlüssen zu erhalten. Dadurch kann ein verzerrungsfreies Führen der Steuerströme und des Injektionsstromes sichergestellt werden, was in weiterer Folge zu verzerrungsfreien Eingangsströmen der Gleichrichterschaltung führt.

### KURZE BESCHREIBUNG DER FIGUREN

Die Erfindung wird im Folgenden anhand von Ausführungsbeispielen mithilfe der beiliegenden Zeichnungen näher erläutert. Es zeigen hierbei die
- Fig. 1: eine herkömmliche Ausführungsform einer Gleichrichterschaltung mit Drossel,
- Fig. 2: eine bevorzugte Ausführungsform einer erfindungsgemäßen Gleichrichterschaltung mit drei Konvertersystemen,
- Fig. 3: eine bevorzugte Ausführungsform einer erfindungsgemäßen Gleichrichterschaltung mit zwei Konvertersystemen,
- Fig. 4: eine bevorzugte Ausführunsgform einer erfindungsgemäßen Gleichrichterschaltung mit Drossel,
- Fig. 4a: den Verlauf der dreiphasigen Netzströme am netzseitigen Eingang der erfindungsgemäßen Gleichrichterschaltung gemäß Figur 4,
- Fig. 4b: den Verlauf einer Ausgangsspannung sowie einer gleichgerichteten Spannung am gleichstromseitigen Ausgang einer erfindungsgemäßen Gleichrichterschaltung gemäß Figur 4,
- Fig. 4c: den Verlauf eines positiven Gleichrichterstroms der erfindungsgemäßen Gleichrichterschaltung gemäß Figur 4,
- Fig. 4d: den Verlauf eines Injektionsstroms der erfindungsgemäßen Gleichrichterschaltung gemäß Figur 4,
- Fig. 4e: den Verlauf eines negativen Gleichrichterstroms der erfindungsgemäßen Gleichrichterschaltung gemäß Figur 4,
- Fig. 4f: den Verlauf eines Drosselstroms einer erfindungsgemäßen Gleichrichterschaltung gemäß Figur 4,
- Fig. 4g: den Verlauf eines Steuerstroms einer erfindungsgemäßen Gleichrichterschaltung gemäß Figur 4,
- Fig. 4h: den Verlauf eines Steuerstroms einer erfindungsgemäßen Gleichrichterschaltung gemäß Figur 4,
- Fig. 5: eine Ausführungsform der dreipoligen Schaltung der erfindungsgemäßen Gleichrichterschaltung mit Drossel,
- Fig. 6: eine weitere bevorzugte Ausführungsform einer erfindungsgemäßen Gleichrichterschaltung mit Drossel,
- Fig. 6a: den Verlauf des Mittelwerts einer Mittelpunktspannung der erfindungsgemäßen Gleichrichterschaltung gemäß Figur 6 bei erfindungsgemäßer Einprägung eines Steuerstroms,
- Fig. 7: eine weitere bevorzugte Ausführungsform einer erfindungsgemäßen Gleichrichterschaltung mit Drossel,
- Fig. 8: eine weitere Ausführungsform der dreipoligen Schaltung der erfindungsgemäßen Gleichrichterschaltung mit Drossel, sowie
- Fig. 9: eine weitere Ausführungsform der dreipoligen Schaltung der erfindungsgemäßen Gleichrichterschaltung mit Drossel.

### WEGE ZUR AUSFÜHRUNG DER ERFINDUNG

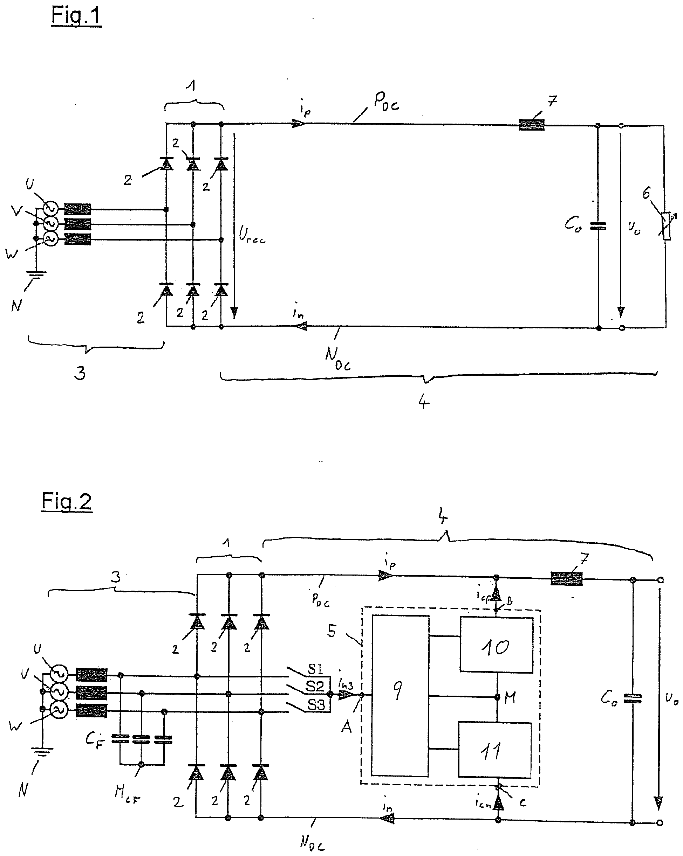

Die Fig. 1 zeigt eine bekannte Gleichrichterschaltung mit einer Gleichrichtanordnung 1 von Halbleiterventilen 2, eine (Sechspuls-) Brückengleichrichtanordnung mit Dioden, sowie mit einer gleichstromseitigen Drossel 7. Die Gleichrichterschaltung umfasst einen netzseitigen Eingang 3 und einen gleichstromseitigen Ausgang 4, wobei am netzseitigen Eingang 3 die Phasen U,V,W ausgeführt sind, und am gleichstromseitigen Ausgang 4 eine positive Ausgangsleitung P_{DC} und eine negative Ausgangsleitung N_{DC}. An der Gleichrichtanordnung 1 liegt eine gleichgerichtete Spannung U_{rec} an, wobei am Ausgang eine konstante Ausgangsspannung U₀ entsteht.

In der Figur 1 ist netzseitig ein Neutralpunkt N, das Massen-Potential des Netzes, dargestellt. Am gleichstromseitigen Ausgang 4 ist mit den Ausgangsleitungen P_{DC}, N_{DC} eine Last 6, dargestellt als variabler Widerstand, verbunden, die eine zeitlich veränderliche Leistung Pₒ(t) aufnimmt. Des Weiteren ist am gleichstromseitigen Ausgang 4 zwischen den Ausgangsleitungen P_{DC},N_{DC} üblicherweise ein Ausgangskondensator C₀ vorgesehen. Die Last 6 wird in den weiteren Figuren nicht dargestellt, da der Anschluss an der jeweiligen selben Stelle wie in Figur 1 erfolgt. Die Last 6 kann auch eine weitere elektronische Schaltung, etwa ein weiterer Stromumrichter, sein, wobei die dargestellte Gleichrichterschaltung dann als sogenannter Gleichrichter mit Spannungszwischenkreis verwendet wird. Die gesamte Leistung der Last 6 wird über die Drossel 7 vom Netz zum Gleichrichterausgang transportiert, wobei die für die dargestellte dreiphasige Diodenbrücke mit Halbleiterventilen 2 typischen Halbwellen der Ausgangsspannung durch eine Drossel 7 in Kombination mit einem Ausgangskondensator C₀ geglättet wird.

Die in Figur 1 dargestellte Gleichrichterschaltung weist jedoch eine bezüglich Netzrückwirkungen nachteilige Ausführung auf. Die Gleichrichterschaltung weist, je nach Dimensionierung der angeordneten Drossel 7, mehr oder weniger pulsförmige Eingangsströme mit stromlosen Lücken am netzseitigen Eingang 3 und verursachen daher unerwünschte Netzrückwirkungen wobei ein etwaig geforderter THDi der Eingangsströme meist nicht erreicht werden kann.

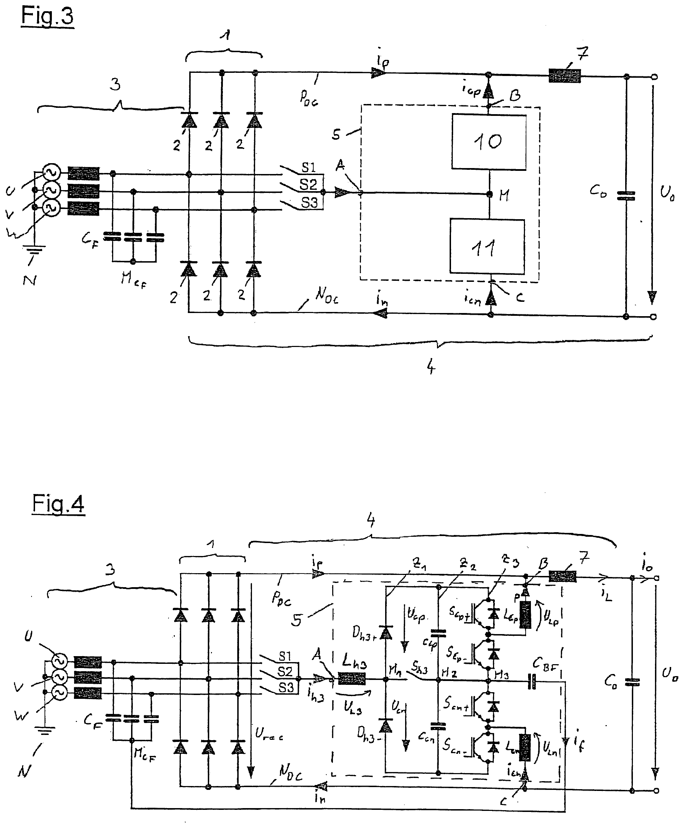

Um das THDi zu verbessern, ist eine erfindungsgemäße Gleichrichterschaltung gemäß Figur 2 und Figur 3 vorgesehen. Die erfindungsgemäße Gleichrichterschaltung mit einer Gleichrichtanordnung 1 weist zusätzlich eine dreipolige Schaltung 5 auf. Die dreipolige Schaltung 5 weist einen ersten Polanschluss A, einen zweiten Polanschluss B und einen dritten Polanschluss C auf. Der erste Polanschluss A ist mit Schaltelementen S₁,S₂,S₃ zumindest zu je einer Phase U,V,W am netzseitigen Anschluss zuschaltbar. Der zweite Polanschluss B ist mit der positiven Ausgangsleitung P_{DC} verbunden, und zwar noch bevor die Drossel 7 die Verbindung zur Last 6 herstellt. Der dritte Polanschluss C ist mit der negativen Ausgangsleitung N_{DC} verbunden.

In Figur 2 ist eine erfindungsgemäße Gleichrichterschaltung mit einem ersten Konvertersystem 9, einem zweiten Konvertersystem 10 und einem dritten Konvertersystem 11 dargestellt. Die dreipolige Schaltung 5 ist mit Konvertersystemen 9,10,11 aufgebaut, wobei das erste Konvertersystem 9 mit dem Polanschluss A, einem zweiten Konvertersystem 10, einem dritten Konvertersystem 11, und einem Mittelpunkt M, verbunden ist. Das zweite Konvertersystem 10 ist mit dem Polanschluss B und dem Mittelpunkt M verbunden, wobei das dritte Konvertersystem 11 mit dem Polanschluss C und dem Mittelpunkt M verbunden ist. Zumindest zwei der Konvertersysteme 9,10,11 weisen steuerbare Halbleiterventile S_{cp+},S_{cp-},S_{cn+},S_{cn-} zur aktiven Regelung von Steuerströmen i_{cp},i_{cn} und/oder eines Injketionsstroms iₕ₃ auf. Das erste Konvertersystem 9 ist als unidirektionaler oder bidirektionaler 3-Level Brückenzweig ausgeführt, wobei das zweite und dritte Konvertersystem 10,11 als Halbbrücken ausgeführt sind.

In Figur 3 ist eine erfindungsgemäße Gleichrichterschaltung 1 mit einem zweiten Konvertersystem 10 und einem dritten Konvertersystem 11 dargestellt. Ein erstes Konvertersystem 9 ist nicht vorgesehen, sondern der erste Polanschluss A ist direkt mit dem Mittelpunkt M verbunden. Die Konvertersystem 10,11 weisen steuerbare Halbleiterventile S_{cp+},S_{cp-},S_{cn+},S_{cn-} zur aktiven Regelung von Steuerströmen i_{cp},i_{Cn} und/oder eines Injketionsstroms iₕ₃ auf.

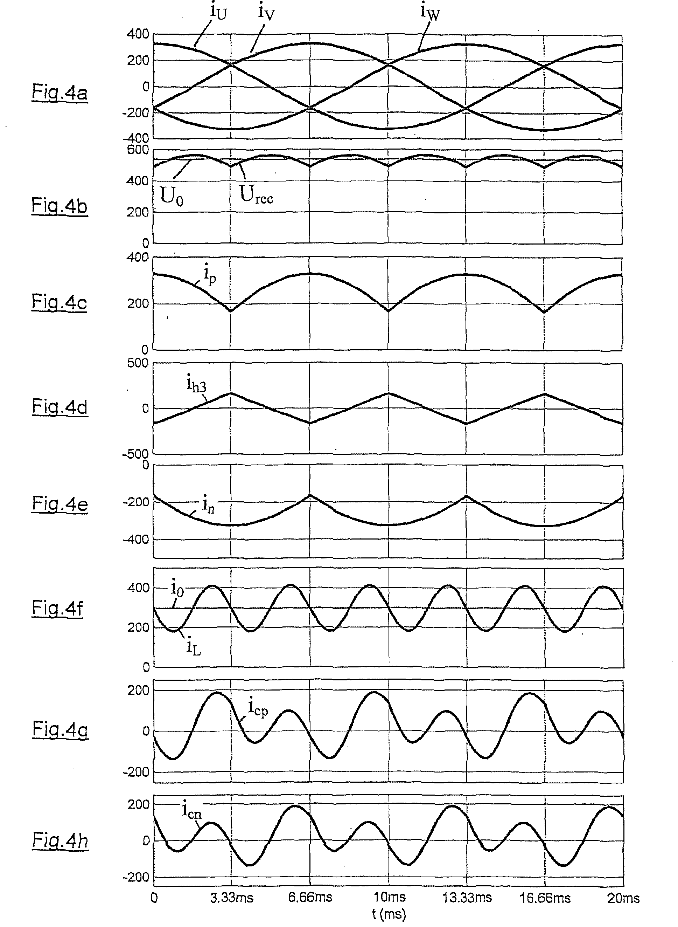

Mit den Schaltelementen S₁,S₂,S₃ wird jeweils eine Phase U,V,W mit dem Polanschluss A der dreipoligen Schaltung 5 verbunden, wobei ein Strompfad für die einen Injektionsstrom iₕ₃ zur Verfügung gestellt wird. Über die Polanschlüsse B,C fließen Steuerströme i_{cp},i_{cn} an den gleichstromseitigen Ausgang 4. Am netzseitigen Eingang 3 werden durch die Einprägung des Injektionsstroms iₕ₃ Netzverzerrung vermieden. Der für sinusförmige Eingangsströme erforderliche Injektionsstrom setzt sich wie in den Figuren 4a bis 4e ersichtlich aus Abschnitten der gewünschten sinusförmigen Eingangsströmen zusammen und weist wie in der Figur 4d dargestellt annähernd dreiecksförmigen Verlauf auf.

Die dreipolige Schaltung 5 gemäß der bevorzugten Ausführungsform einer erfindungsgemäßen Gleichrichterschaltung nach Figur 4 verwendet zur Implementierung des ersten Konvertersystems 9 einen unidirektionalen 3-Level Brückenzweig bestehend aus den beiden Gleichrichterdioden Dₕ₃₊ und Dₕ₃₋ auf einem ersten Zweig Z₁ und einem bidirektionalen Schalter Sₕ₃ von einem ersten Mittelpunktanschluss M₁ zu einem zweiten Mittelpunktanschluss M₂, wobei die Dioden Dₕ₃₊,Dₕ₃₋ den ersten Mittelpunktanschluss M₁ mit den positiven und negativen Anschlüssen der Pufferkondensatoren C_{CP},C_{CN} verbinden, welche Pufferkondensatoren am zweiten Zweig Z₂ vorgesehen sind. Durch den bidirektionalen Schalter Sₕ₃ wird der erste Mittelpunktanschluss M₁ durch einschalten des bidirektionalen Schalters Sₕ₃ mit dem zweiten Mittelpunktanschluss M₂ und damit über eine leitende Verbindung auch mit dem Mittelpunkt M der dreipoligen Schaltung 5 verbunden. Das zweite Konvertersystem 10 sowie das dritte Konvertersystem 11 sind durch zwei Halbbrücken mit den vier steuerbaren Halbleiterventilen S_{cp+},S_{cp-},S_{cn+},S_{cn-} vorgesehen wobei die positiven, und negativen Anschlüsse der beiden Halbbrücken mit den Pufferkondensatoren C_{CP},C_{CN} verbunden sind. Die Halbleiterventile S_{cp+},S_{cp-},S_{cn+},S_{cn-} sind an einem dritten Zweig Z3 vorgesehen. Die Ausführung einer derartigen Verschaltung von steuerbaren Halbleiterventilen S_{cp+},S_{cp-},S_{cn+},S_{cn-} ist insbesondere mit einer bekannten, am Markt erhältlichen und damit günstig zu realisierenden sogenannten "3-Level-Topologie" von IGBTs mit Freilaufdioden möglich, wobei dabei auch ein Mittelpunkt M vorgesehen ist. Die Pufferkondensatoren C_{CP},C_{CN} sind sowohl Bestandteil des 3-Level Brückenzweigs des ersten Konvertersystems 9, als auch der Halbbrücken des zweiten und dritten Konvertersystems 9,10. Die Polanschlüssen B und C der dreipoligen Schaltung sind zwischen jeweils einem ersten Paar S_{cp+},S_{cp-} und einem zweiten Paar S_{cn+},S_{cn-} von steuerbaren Halbleiterventilen vorgesehen. Durch geeignete Ansteuerung der steuerbaren Halbleiterventile S_{cp+},S_{cp-},S_{cn+},S_{cn-}der beiden Halbbrücken und des 3-Level Brückenzweiges können die Ströme iₕ₃,i_{cp},i_{cn} geregelt werden.

Des Weiteren weist die bevorzugte Ausführungsform der erfindungsgemäßen Gleichrichterschaltung gemäß Figur 4 am netzseitigen Eingang 3 mit den Phasen U,V,W verbundene, sternförmig angeordnete Filterkondensatoren C_{F} auf. Die Filterkondensatoren C_{F} sind sternförmig um einen Sternpunkt M_{CF} angeordnet. Der Sternpunkt M_{CF} ist weiters mit einem Ableitkondensator C_{BF} mit einem Mittelpunkt M der dreipoligen Schaltung 5 verbunden. Diese Verbindung des netzseitigen Eingangs 3 mit einem Ableitkondensator C_{BF} über die Filterkondensatoren C_{F}, erlaubt hochfrequente Fehlerströme i_{f}, entstehend durch die hochfrequenten Schaltvorgänge in der dreipoligen Schaltung 5, abfließen zu lassen, was insbesondere Vorteile aufweist, wenn alle drei Ströme iₕ₃, i_{cp}, und i_{cn} der dreipoligen Schaltung 5 mit eigens ausgeführten Regler geregelt werden. Der Anschluss des Ableitkondensator C_{BF} wird jedoch nicht als weiterer, vierter Polanschluss der dreipoligen Schaltung 5 angesehen, da die abgeleiteten Fehlerströme i_{f} hochfrequent und vergleichsweise klein gegenüber den Strömen in den Polanschlüssen A,B,C sind.

Jeder der Polanschlüsse A,B,C ist gemäß einer bevorzugten Ausführungsform in Figur 4 mit einer Induktivität Lₕ₃,L_{cp},L_{cn} verbunden, welche zum Führen der beiden Steuerströme i_{cp}, i_{cn} und des Injektionsstromes iₕ₃ verwendet werden. Es werden auf diese Weise mindestens zwei der drei Ströme iₕ₃,i_{cp},i_{cn} geregelt, wobei sich der dritte Strom aufgrund der zwingenden Stromsumme null ergibt.

Die Figur 4a zeigt den Stromverlauf der Phasen U,V,W am netzseitigen Eingang 3. Die Phasenströme iᵤ,iᵥ,i_{w} sind entsprechend eines Drehstromnetzes phasenverschoben.

Die Fig. 4b zeigt zunächst die gleichgerichtete Spannung U_{rec} die zwischen den beiden Ausgangsleitungen P_{DC},N_{DC} nach der Gleichrichtanordnung 1 anliegt. Die gleichgerichtete Spannung U_{rec} weist zusätzlich zu einer Ausgangsspannung U₀ sinusförmige Kuppen auf. Durch Filterung der gleichgerichteten Spannung U_{rec} mit der Drossel 7 und dem Ausgangskondensator C₀ wird eine konstante Ausgangsspannung U₀ erreicht.

Die Figur 4c zeigt den Verlauf eines positiven Gleichrichterstroms iₚ, der sich durch geeignete Zuführung eines Steuerstromes i_{cp} in die positive Ausgangsleitung P_{DC} des Brückengleichrichters, ergibt. Die dargestellten Sinuskuppen entsprechen den jeweiligen Ausschnitten der sinusförmigen Eingangsströme iᵤ,iᵥ,i_{w}.

In Figur 4d ist der Injektionsstrom iₕ₃ dargestellt, welcher den dreiecksförmigen Anteilen der Netzströme iᵤ,iᵥ,i_{w} entspricht. Mit der erfindungsgemäßen Gleichrichterschaltung wird dieser Injektionsstrom iₕ₃ der dreipoligen Schaltung 5 zugeführt.

Der Drosselstrom i_{L} ist in Figur 4f dargestellt und besitzt einen konstanten Ausgangsstrom i₀ welcher direkt der Last 6 zugeführt wird, und einen überlagerten Wechselanteil, der sich aufgrund der Spannungsdifferenz der Gleichrichterausgangsspannung U_{rec} und der annähernd konstanten Ausgangsspannung U₀ ergibt. Der Verlauf der benötigten Steuerströme i_{cp}, i_{cn} ist in den Figuren 4g und 4h dargestellt Die Steuerströme i_{cp}, i_{cn} sind vorzugsweise gemäß der Figur 4g und Figur 4h zu regeln.

Gemäß einer weiteren Ausführungsform können ein zweites und drittes Konvertersystem 9,10 der dreipoligen Schaltung 5 vorgesehen sein. Das erste Konvertersystem 9 ist durch eine direkte Verbindung mit dem Polanschluss A über den Mittelpunkt M verbunden. Das zweite und dritte Konvertersystem 10,11 wird, wie bereits in Figur 4 beschrieben, vorteilhaft durch Halbbrücken mit steuerbaren Halbleiterventilen S_{cp+},S_{cp-},S_{cn+},S_{cn-} und Pufferkondensatoren ausgeführt. Durch die direkte Verbindung des Mittelpunktes M mit dem Polanschluss A der dreipoligen Schaltung 5 ist das Potential des Mittelpunktes M definiert und zeigt keine hochfrequenten Spannungssprünge. Dabei werden die beiden Steuerströme i_{cp},i_{cn} durch geeignete Ansteuerung der steuerbaren Halbleiterventile der beiden Halbbrücken und geregelt, wobei sich der Injektionsstrom iₕ₃ aufgrund der Stromsumme von null der dreipoligen Schaltung 5 ergibt. Eine Verbindung der dreipoligen Schaltung 5 mittels Ableitkondensators C_{BF} zurück zum Netz ist gemäß der Ausführungsform der Gleichrichterschaltung nach Fig. 3 nicht vorgesehen.

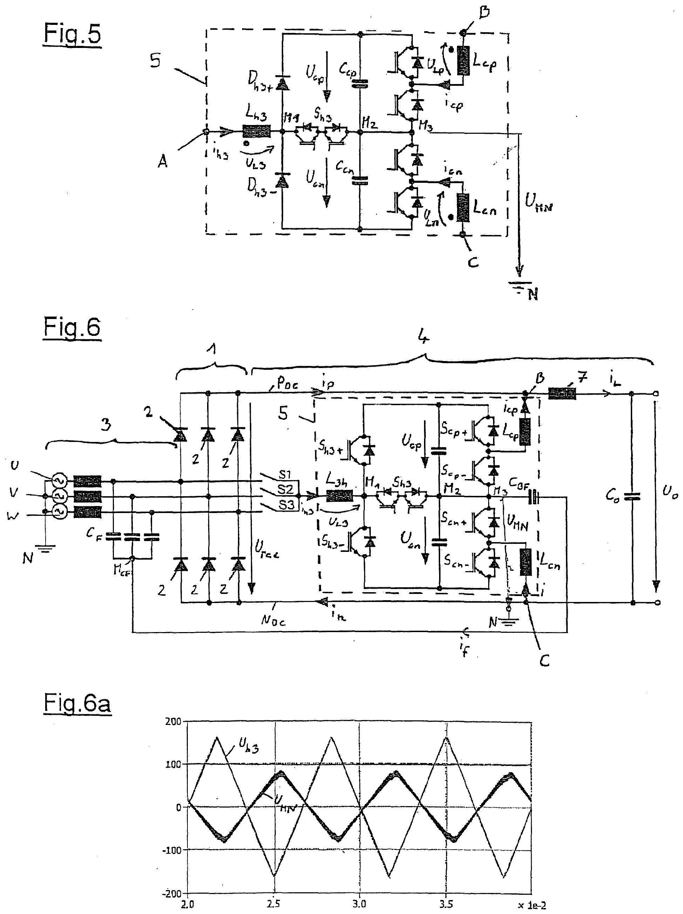

In Figur 5 ist eine vorteilhafte Ausführungsform der drei Induktivitäten Lₕ₃,L_{cp},L_{cn} mit einer Drei-Schenkel-Drossel angedeutet, wobei die Wicklungssinne mit Punkten an den einzelnen Drosseln eingetragen wird, was vorteilhaft eine wesentliche Reduzierung des Bauvolumens und Gewichts der magnetischen Bauelemente und somit des gesamten erfindungsgemäßen Gleichrichtersystems zur Folge hat.

Des Weiteren ist in der Figur 5 eine Ausführungsform des bidirektionalen Schalters Sₕ₃ eines unidirektionalen 3-Level Brückenzweigs des ersten Konvertersystems 9 einer dreipoligen Schaltung 5 dargestellt, bei der zwei gegeneinander geschaltete IGBTs mit antiparallelen Freilaufdioden verwendet werden, wobei alternativ auch andere Schalterelemente wie zum Beispiel MOSFETs verwendet werden können. Diese Ausführung von bidirektionalen Schaltern Sₕ₃ ist an sich bekannt, soll jedoch hier im Zusammenspiel mit der erfindungsgemäßen Gleichrichterschaltung illustriert werden, wobei in Zusammenschau des bidirektionalen Schalters Sₕ₃ mit der erfindungsgemäßen Gleichrichterschaltung sowie dem erfindungsgemäßen Verfahren zum Einprägen von Steuerströmen die Regelung einer Mittelpunktspannung U_{MN} erklärt werden soll.

Die Mittelpunktspannung U_{MN}, dargestellt in Figur 5 und Figur 6, beieinflusst die Erzeugung der Differenzspannungen U_{L3},U_{Lp},U_{Ln} über den Induktivitäten Lₕ₃,L_{cp},L_{cn} um die Steuerströme und/oder den Injektionsstrom zu regeln. Die erste Differenzspannung U_{L3} ergibt sich über der ersten Induktivität Lₕ₃ usw. Eine Injektionsspannung Uₕ₃ ergibt sich aus dem Potential des ersten Polanschlusses A gegenüber dem Netz, also gegenüber dem Neutralpunkt N.

Im Folgenden seien zusammengefasst Möglichkeiten zum Regeln der erfindungsgemäßen Einprägung von Steuerströmen aufgeführt:
-) Es werden alle drei Ströme iₕ₃,i_{cp},i_{cn} simultan mit drei Konvertersystemen 9,10,11 auf einen gewünschten Verlauf geregelt. Eine Regelung der Mittelpunktspannung U_{MN} ist dabei nicht möglich, da alle Freiheitsgrade der erfindungsgemäßen Gleichrichterschaltung bereits zur Regelung verwendet werden. Bei eventuell auftretenden Regelfehlern treten Potentialsprünge der Mittelpunktspannung U_{MN} in Erscheinung die vorteilhaft durch eine Ausführung mit Ableitkondensator C_{BF} eingefangen werden können.
-) Es werden jeweils nur zwei der drei Ströme iₕ₃,i_{cp},i_{cn} mit den jeweiligen Konvertersystemen 9,10,11 geregelt, wobei z.B. das Konvertersystem 9 den Injektionsstrom iₕ₃ und das Konvertersystem 10 den Steuerstrom i_{cp} regelt. Aufgrund des prinzipgedingten Umstandes, dass die Stromsumme der dreipoligen Schaltung null ist, wird das dritte Konvertersystem 11 vorteilhaft dazu verwendet um den Mittelwert der Mittelpunktspannung U_{MN} zu regeln.
-) Gemäß einer weiteren bevorzugten Ausführungsform ist eine Minimierung der Pufferkondensatorspannungen U_{cp},U_{cn} möglich, indem der Mittelwert der Mittelpunktspannung U_{MN} gegengleich zur am ersten Polanschluss A der dreipoligen Schaltung 5 auftretenden Injektionsspannung Uₕ₃ geregelt wird. Es werden wieder jeweils nur zwei der drei Ströme iₕ₃,i_{cp},i_{cn} mit den jeweiligen Konvertersystemen 9,10,11 geregelt, wobei z.B. das Konvertersystem 11 den Injektionsstrom iₕ₃ und das Konvertersystem 9 den Steuerstrom i_{cp} regelt, wobei das dritte Konvertersystem 10 dann zur Regelung des Mittelwertes der Mittelpunktspannung U_{MN} herangezogen wird. Beispielhaft ist in Figur 6a solch eine, gegengleich zur Spannung am ersten Polanschluss A der dreipoligen Schaltung 6 geregelter Mittelwert der Mittelpunktspannung U_{MN} eingezeichnet, wobei in Figur 6a nur die über eine Schaltperiode der Halbleiterventile S_{cp+},S_{cp-},S_{cn+},S_{Cn-},Sₕ₃,Sₕ₃₊,Sₕ₃₋ gemittelte Mittelpunktspannung, dargestellt ist.

Während für die ersten beiden Regelungsverfahren das erste Konvertersystem 9 mit einem unidirektionalen 3-Level Brückenzweig ausgeführt werden kann, ist für das dritte Regelungsverfahren eine bidirektionale Ausführung des 3-Level Brückenzweigs des ersten Konvertersystems 9 unbedingt erforderlich.

In Figur 6 ist eine bevorzugte Ausführungsform der dreipoligen Schaltung 5 mit bidirektionalem 3-Level Brückenzweig im ersten Konvertersystem 9 dargestellt. Dabei werden die Gleichrichterdioden Dₕ₃₊,Dₕ₃₋ am ersten Zweig Z₁, wie in Figur 4 dargestellt, durch aktive steuerbare Halbleiterbauelemente Sₕ₃₊,Sₕ₃₋, z.B. wie in Figur 6 dargestellt durch IGBTs mit antiparallelen Freilaufdioden, ersetzt. Dadurch können Ströme auch gegenphasig zur Injektionsspannung Uₕ₃ am ersten Polanschluss A der dreipoligen Schaltung 5 eingeprägt werden.

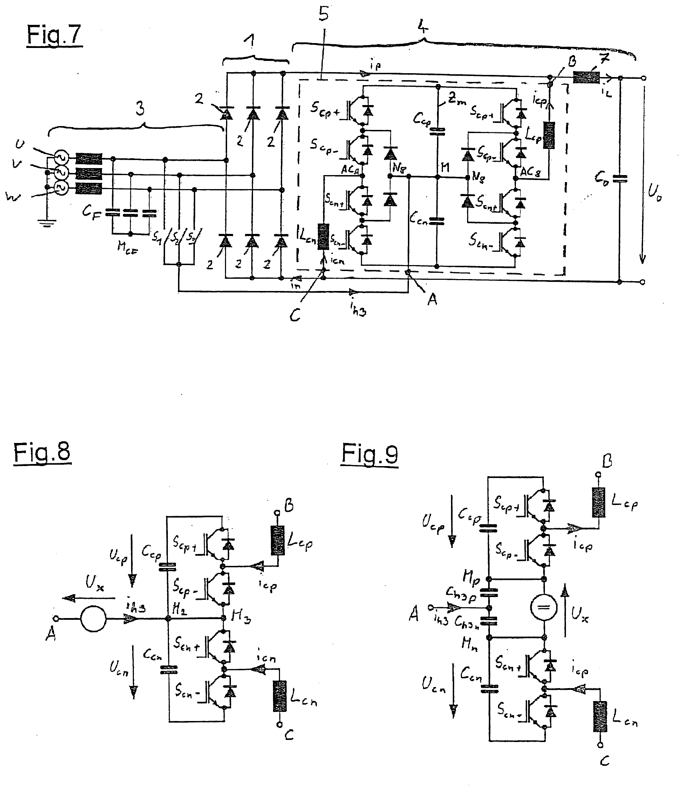

Die Figur 7 zeigt eine Ausführungsform der erfindungsgemäßen Gleichrichterschaltung, wobei das erste Konvertersystem 9 durch eine direkte Verbindung des ersten Polanschlusses A mit dem Mittelpunkt M der dreipoligen Schaltung 5 ersetzt wird, und sowohl das zweite Konvertersystem 10 als auch das dritte Konvertersystem 11 durch einen 3-Level Brückenzweig ausgeführt ist, wobei in Figur 7 der an sich bekannte *Three-Level Neutral-Point-Clamped-Converter 3L-NPC* ausgeführt ist, wpbei auch gattungsgleiche Brückenzweige eingesetzt werden können. Die beiden 3-Level Brückenzweige sind jeweils symmetrisch um einen Mittelpunktzweig Zm angeordnet, wobei der Mittelpunktzweig mit den Gleichspannungsanschlüssen der 3-Level Brückenzweige verbunden ist. Der Mittelpunktzweig Zₘ ist mit Pufferkondensatoren C_{CP},C_{CN} vorgesehen, und über die Schaltelemente S₁,S₂,S₃ direkt an den Mittelpunkt M des Mittelpunktzweiges Zₘ mit dem netzseitigen Eingang 3 zuschaltbar verbunden. Ein Neutralanschluss N₈ der 3-Level Brückenzweige ist dabei mit dem Mittelpunkt M und dem ersten Polanschluss A verbunden. Ein Wechselspannungsanschluss AC₈ des 3L-NPCs ist über die Induktivitäten L_{CP},L_{CN} jeweils mit den Polanschlüssen B,C verbunden. In dieser Ausführung werden die Steuerströme i_{cp},i_{cn} durch geeignete Ansteuerung der Halbleiterventile S_{cp+},S_{cp-},S_{cn+},S_{cn-} der 3-Level Brückenzweige geregelt, wobei sich der Injektionsstrom iₕ₃ automatisch ergibt. Da der Mittelpunkt M direkt über die Schalter S1,S2,S3 mit den Netzphasen U,V,W verbunden ist erübrigt sich eine Regelung der Mittelspannung U_{MN}. Da die Steuerströme i_{cn},i_{cp} sowohl positives als auch negatives Vorzeichen bei stets positivem bzw. negativem Spannungsniveau am Mittelpunkt M aufweisen, müssen bidirektionale Brückenstrukturen in den beiden Konvertersystemen 10,11 verwendet werden.

Die Figur 8 zeigt eine weitere Ausführungsform der dreipoligen Schaltung 5, wobei am Stromzweig des Injektionsstromes iₕ₃ zusätzlich eine Spannungsquelle Uₓ vorgesehen ist. Die Steuerströme i_{cp},i_{cn} werden dabei durch geeignete Ansteuerung der steuerbaren Halbleiterventile S_{cp+},S_{cp-},S_{cn+},S_{cn-} der Konvertersysteme 10,11 geregelt, wobei sich der Injektionsstrom iₕ₃ automatisch ergibt. Die Spannungsquelle Uₓ prägt erfindungsgemäß im Zweig zwischen dem Polanschluss A und dem Mittelpunkt M der dreipoligen Schaltung eine zeitlich veränderliche Spannung ein, die eine Erhöhung bzw. Reduzierung der Mittelpunktspannung U_{MN} zur Folge hat und eine verzerrungsarme Führung der Steuerströme i_{cp}, i_{cn} ermöglichen.

In Figur 9 ist eine weitere Ausführungsform einer dreipoligen Schaltung 5 mit Spannungsquelle Uₓ dargestellt, welche zwischen dem zweiten und dritten Konvertersystem 10,11 der dreipoligen Schaltung vorgesehen ist, wobei es sich bei der Spannungsquelle Uₓ gemäß Figur 9 um eine Gleichspannungsquelle handelt. Parallel zur Spannungsquelle sind zwei Injektionskondensatoren Cₕ₃ₚ,Cₕ₃ₙ vorgesehen, deren Verbindung mit dem Polanschluss A der dreipoligen Schaltung 5 verbunden ist. Die Steuerströme i_{cp},i_{cn} werden dabei durch geeignete Ansteuerung der steuerbaren Halbleiterventile S_{cp+},S_{cp-},S_{cn+},S_{cn-} geregelt, wobei sich der Injektionsstrom iₕ₃ aufgrund der Stromsumme null automatisch ergibt. Durch die zusätzlich eingefügte Spannungsquelle Uₓ wird das negative Potential des zweiten Konvertersystems 10 vorteilhaft erniedrigt bzw. das Potential des positiven Anschlusses des dritten Konvertersystems 11 vorteilhaft angehoben was in weiterer Folge eine weitestgehend verzerrungsfreie Führung der beiden Steuerströme i_{cn},i_{cp} ermöglicht.

Es ist damit unmittelbar ersichtlich, dass eine Gleichrichterschaltung mit Strominjektion sowie ein Verfahren zum Einprägen von Steuerströmen in jener Weise verbessert wurde, dass geringe Netzrückwirkungen der Gleichrichterschaltung auftreten, wobei dabei ein möglichst sinusförmiger Eingangsstrom in Phase mit den jeweiligen Netzspannungen vorliegen soll, keine großen magnetische Bauelemente an der Wechselspannungsseite der Gleichrichterschaltung benötigt werden, pulsförmige Injektion des Steuerstroms an den Ausgang der Gleichrichterschaltung vermieden wird, keine großen wechselspannungs- bzw. gleichspannungsseitigen angeordneten Filterkondensatoren benötigt werden, und der Wirkungsgrad der Gleichrichterschaltung verbessert wird.

### Bezugszeichenliste:

- 1: Gleichrichtanordnung
- 2: Halbleiterventil
- 3: netzseitiger Eingang
- 4: gleichstromseitiger Ausgang
- 5: dreipolige Schaltung
- 6: Last
- 7: Drossel

- A: erster Polanschluss
- AC₈: Wechselspannungsanschluss
- B: zweiter Polanschluss
- C: dritter Polanschluss
- C₀: Ausgangskondensator
- C_{BF}: Ableitkondensator
- C_{F}: Filterkondensator
- C_{cp}: Pufferkondensator
- C_{cn}: Pufferkondensator
- Cₕ₃ₚ: Injektionskondensator
- Cₕ₃ₙ: Injektionskondensator
- Dₕ₃₊: Brückenventil
- Dₕ₃₋: Brückenventil
- iₕ₃: Injektionsstrom
- i_{cn}: Steuerstrom
- i_{cp}: Steuerstrom
- i_{L}: Drosselstrom
- iₚ: positiver Gleichrichterstrom
- iₙ: negativer Gleichrichterstrom
- i_{f}: Fehlerstrom
- iᵤ: Phasentsrom
- iᵥ: Phasenstrom
- i_{w}: Phasenstrom
- Lₕ₃: erste Induktivität
- L_{cp}: zweite Induktivität
- L_{cn}: dritte Induktivität
- M₁: erster Mittelpunktanschluss
- M₂: zweiter Mittelpunktanschluss
- M₃: dritter Mittelpunktanschluss
- M: Mittelpunkt
- M_{CF}: Sternpunkt
- Mₚ: Anschlusspunkt
- Mₙ: Anschlusspunkt
- N: Neutralpunkt
- N₈: Neutralanschluss
- N_{Dc}: negative Ausgangsleitung
- P_{DC}: positive Ausgangsleitung
- P₀(t): zeitlich veränderliche Leistung
- S₁: Schaltelement
- S₂: Schaltelement
- S₃: Schaltelement
- S_{cp+}: steuerbares Halbleiterventil
- S_{cp-}: steuerbares Halbleiterventil
- S_{cn+}: steuerbares Halbleiterventil
- S_{cn-}: steuerbares Halbleiterventil
- Sₕ₃₊: steuerbares Halbleiterventil
- Sₕ₃₋: steuerbares Halbleiterventil
- Sₕ₃: bidirektionaler Schalter
- U: Phase
- Uₓ: Spannungsquelle
- U₀: Ausgangsspannung
- U_{rec}: gleichgerichtete Spannung
- U_{Lp}: erste Differenzspannung
- U_{Ln}: zweite Differenzspannung
- U_{L3}: dritte Differenzspannung
- Uₕ₃: Injektionsspannung
- U_{cp}: Pufferkondensatorspannung
- U_{cn}: Pufferkondensatorspannung
- U_{MN}: Mittelpunkts spannung
- V: Phase
- W: Phase
- Z₁: erster Zweig
- Z₂: zweiter Zweig
- Z₃: dritter Zweig
- Zₘ: Mittelpunktzweig

## Patentansprüche

1. Gleichrichterschaltung mit einer dreiphasigen sechs-pulsigen Gleichrichtanordnung (1) von Halbleiterventilen (2), vorzugsweise einer Brückengleichrichterschaltung von Dioden, mit einer Last (6), wobei die Gleichrichtanordnung (1) einen dreiphasigen netzseitigen Eingang (3) und einen drei Schaltelemente (S1, S2, S3) und eine dreipolige Schaltung (5) umfassenden gleichstromseitigen Ausgang (4) aufweist, und jede Phase (U,V,W) des netzseitigen Eingangs (3) jeweils mit einem Schaltelement (S₁, S₂, S₃) zu einem ersten Polanschluss (A) der dreipoligen Schaltung (5) zum Ableiten eines Injektionsstromes (iₕ₃) in die dreipolige Schaltung (5) zuschaltbar ist, und ein zweiter und dritter Polanschluss (B,C) der dreipoligen Schaltung (5) jeweils mit einer Ausgangsleitung (P_{DC},N_{DC}) des gleichstromseitigen Ausganges (4) für Steuerströme (i_{cp},i_{cn}) verbunden ist, wobei die dreipolige Schaltung (5) als Regelungsschaltung zur aktiven, voneinander unabhängigen Regelung von zumindest zwei der durch Steuerströme (i_{cp},i_{cn}) und Injektionsstrom (iₕ₃) gegebenen drei Ströme (i_{cp},i_{cn}, iₕ₃) zur Erzeugung sinusförmiger Gleichrichtereingangsströme ausgelegt ist und steuerbare Halbleiterventile (S_{cp+},S_{cp-},S_{cn+},S_{cn-}), vorzugsweise IGBTs, zur aktiven Regelung von zwei der durch Steuerströme (i_{cp},i_{cn}) und Injektionsstrom (iₕ₃) gegebenen drei Ströme (i_{cp},i_{cn}, iₕ₃) aufweist, sowie eine Drossel (7) an einer der Ausgangsleitungen (P_{DC},N_{DC}) des gleichstromseitigen Ausganges (4) zwischen dem zweiten Polanschluss (B) und der Last (6) oder zwischen dem dritten Polanschluss (C) und der Last (6) am gleichstromseitigen Ausgang (4) angeordnet ist, und die Last (6) am gleichstromseitigen Ausgang (4) eine zeitlich veränderliche Last (6) ist, wobei die Regelungsschaltung zur Zuführung des Injektionsstroms nur in diejenige Phase, die aufgrund des Betriebes der sechs-pulsigen Gleichrichtanordnung stromlos bleibt, ausgelegt ist.

2. Gleichrichterschaltung nach Anspruch 1, wobei der zweite und dritte Polanschluss (B,C) der dreipoligen Schaltung (5) jeweils über eine zweite und dritte Induktivität (L_{cp},L_{cn}) mit einer der beiden Ausgangsleitungen (P_{DC},N_{DC}) des gleichstromseitigen Ausganges (4) verbunden ist.

3. Gleichrichterschaltung nach Anspruch 2, wobei über eine erste Induktivität (Lₕ₃) der erste Polanschluss (A) mit den Schaltelementen (S1,S2,S3) verbunden ist, wobei die drei Induktivitäten (Lₕ₃,L_{cp},L_{cn}) mittels 3-Schenkel-Drossel ausgeführt sind.

4. Gleichrichterschaltung nach einem der Ansprüche 1 bis 3, wobei die beiden Ausgangsleitungen (P_{DC},N_{DC}) am gleichstromseitigen Ausgang (4) mit einem Ausgangskondensator (C₀) verbunden sind.

5. Gleichrichterschaltung nach einem der Ansprüche 1 bis 4, wobei jede der drei Phasen (U,V,W) am netzseitigen Eingang (3) jeweils mit einem Filterkondensators (C_{F}) verbunden ist, wobei die Filterkondensatoren (C_{F}) sternförmig in einem Sternpunkt (M_{CF}) zusammengeschaltet sind.

6. Gleichrichterschaltung nach einem der Ansprüche 1 bis 5, wobei die dreipolige Schaltung (5) über zumindest einen Ableitkondensator (C_{BF}) mit dem netzseitigen Eingang (3) verbunden ist.

7. Gleichrichterschaltung nach einem der Ansprüche 1 bis 6, wobei die dreipolige Schaltung drei Konvertersysteme (9,10,11) mit steuerbaren Halbleiterventilen (S_{cp+},S_{cp-},S_{cn+},S_{cn-}) und/oder einem bidirektionalem Schalter (Sₕ₃), vorzugsweise angeordnet in einer Brückenstruktur, umfasst, wobei an einem ersten Konvertersystem (9) der erste Polanschluss (A) der dreipoligen Schaltung (5), an einem zweiten Konvertersystem (10) der zweite Polanschluss (B) der dreipoligen Schaltung (5), sowie an einem dritten Konvertersystem (11) der dritte Polanschluss (C) der dreipoligen Schaltung (5) vorgesehen ist, und von allen drei Konvertersystemen (9,10,11) eine Verbindung zu einem Verzweigungspunkt, einem gemeinsamen Mittelpunkt (M) der dreipoligen Schaltung (5), vorgesehen ist.

8. Gleichrichterschaltung nach Anspruch 7, wobei das erste Konvertersystem (9) als 3-Level Brückenzweig vorgesehen ist, wobei das zweite und dritte Konvertersystem (10,11) als Halbbrücke vorgesehen sind, und die drei Konvertersysteme (9,10,11) mittels dreier parallel geschalteter Zweige (Z₁,Z₂,Z₃) ausgeführt sind die mit elektronischen Bauelementen besetzt sind, wobei an einem ersten Zweig (Z₁) der erste Polanschluss (A) der dreipoligen Schaltung (5) ausgeführt ist, und an einem dritten Zweig (Z₃) der zweite und dritte Polanschluss (B,C) ausgeführt sind, und jeder der Zweige (Z₁,Z₂,Z₃) einen Mittelpunktanschluss (M₁,M₂,M₃) aufweist, um welche Mittelpunktanschlüsse (M₁,M₂,M₃) die Bauelemente der Zweige (Z₁,Z₂,Z₃) symmetrisch angeordnet sind, wobei ein erster Mittelpunktanschluss (M₁) des ersten Zweigs (Z₁) über einen bidirektionalen Schalter (Sₕ₃) mit einem zweiten Mittelpunktanschluss (M₂) des zweiten Zweigs (Z₂) verbunden ist, und der zweite Mittelpunktanschluss (M₂) direkt mit einem dritten Mittelpunktanschluss (M₃) des dritten Zweigs (Z₃) leitend verbunden ist, wobei der dritte Mittelpunktanschluss (M₃) als Mittelpunkt (M) der dreipoligen Schaltung (5) vorgesehen ist.

9. Gleichrichterschaltung nach einem der Ansprüche 1 bis 6, wobei die dreipolige Schaltung zwei Konvertersysteme (10,11) mit steuerbaren Halbleiterventilen (S_{cp+},S_{cp-},S_{cn+},S_{cn-}), vorzugsweise angeordnet in einer Brückenstruktur, umfasst, wobei an einem zweiten Konvertersystem (10) der zweite Polanschluss (B) der dreipoligen Schaltung (5), sowie an einem dritten Konvertersystem (11) der dritte Polanschluss (C) der dreipoligen Schaltung (5) vorgesehen ist, und von beiden Konvertersystemen (10,11) eine Verbindung zu einem Verzweigungspunkt, einem gemeinsamen Mittelpunkt (M) der dreipoligen Schaltung (5), vorgesehen ist, und der Mittelpunkt (M) mit dem ersten Polanschluss (A) verbunden ist.

10. Gleichrichterschaltung nach Anspruch 9, wobei das zweite und dritte Konvertersystem (10,11) als Halbbrücke vorgesehen sind, wobei die zwei Konvertersysteme (10,11) mittels zweier parallel geschalteter Zweige (Z₂,Z₃) ausgeführt sind, und mit einem zweiten Zweig (Z₂) der erste Polanschluss (A) der dreipoligen Schaltung (5) verbunden ist, und an einem dritten Zweig (Z3) der zweite und dritte Polanschluss (A,B) ausgeführt sind, und jeder der Zweige (Z₂,Z₃) einen Mittelpunktanschluss (M₂,M₃) aufweist, um welche Mittelpunktanschlüsse (M₂,M₃) die Bauelemente der Zweige (Z₂,Z₃) symmetrisch angeordnet sind, und ein zweiter Mittelpunktanschluss (M₂) des zweiten Zweigs (Z₂) direkt mit einem dritten Mittelpunktanschluss (M₃) des dritten Zweigs (Z₃) leitend verbunden ist, wobei der dritte Mittelpunktanschluss (M₃) als Mittelpunkt (M) der dreipoligen Schaltung (5) vorgesehen ist.

11. Gleichrichterschaltung nach Anspruch 10, wobei der zweite Mittelpunktanschluss (M₂) über eine Spannungsquelle (Uₓ) mit dem ersten Polanschluss (A) verbunden ist.

12. Gleichrichterschaltung nach Anspruch 8, wobei im ersten Zweig (Z₁) zwei Brückenventile (Dₕ₃₊,Dₕ₃₋), vorzugsweise Dioden, in Serie mit derselben Durchlassrichtung geschaltet sind, wobei der erste Mittelpunktanschluss (M₁) zwischen den beiden Brückenventilen (Dₕ₃₊,Dₕ₃₋) angeordnet ist.

13. Gleichrichterschaltung nach Anspruch 8 oder 10, wobei am zweiten Zweig (Z₂) zwei Pufferkondensatoren (C_{CP}, C_{CN}) in Serie geschaltet sind, wobei der zweite Mittelpunktanschluss (M₂) zwischen den beiden Pufferkondensatoren (C_{CP}, C_{CN}) angeordnet ist.

14. Gleichrichterschaltung nach einem der Ansprüche 8 oder 10, wobei am dritten Zweig (Z₃) die vier steuerbaren Halbleiterventile (S_{cp+},S_{cp-},S_{cn+},S_{cn-}) in Serie geschaltet vorgesehen sind, wobei der Mittelpunkt (M) der dreipoligen Schaltung (5) in der Verbindung zwischen zwei seriell geschalteten Paaren der steuerbaren Halbleiterventile (S_{cp+},S_{cp-},S_{cn+},S_{cn-}) angeordnet ist, und der zweite Polanschluss (B) zwischen den steuerbaren Halbleiterventilen (S_{cp+},S_{cp-}) des ersten Paars vorgesehen ist, und der dritte Polanschluss (C) zwischen den steuerbaren Halbleiterventilen (S_{cn+},S_{cn-}) des zweiten Paars vorgesehen ist.

15. Gleichrichterschaltung nach Anspruch 12, wobei die beiden Brückenventile (Dₕ₃₊,Dₕ₃₋) als steuerbare Halbleiterventile (Sₕ₃₊, Sₕ₃₋), vorzugsweise IGBTs, ausgeführt sind.

16. Gleichrichterschaltung nach Anspruch 9, wobei das zweite und dritte Konvertersystem (10,11) der dreipolige Schaltung (5) mit an sich bekannten bidirektionalen 3-Level Brückenzweigen ausgeführt sind, vorzugsweise zwei sogenannte Three-Level Neutral-Point-Clamped-Converters (3L-NPC), wobei die 3-Level Brückenzweige symmetrisch um einen zu den 3-Level Brückenzweigen parallel geschalteten Mittelpunktzweig (Zm) angeordnet sind, und der Mittelpunktzweig (Zm) als zwei in Serie geschaltete Pufferkondensatoren (C_{CP},C_{CN}) ausgeführt ist, sowie der Mittelpunkt (M) zwischen den beiden Pufferkondensatoren (C_{CP},C_{CN}) vorgesehen ist, und ein Neutralanschluss (N₈) des 3-Level Brückenzweigs mit dem Mittelpunkt (M) und dem ersten Polanschluss (A) verbunden ist, sowie ein Wechselspannungsanschluss (AC₈) des 3-Level Brückenzweigs jeweils als der zweite Polanschluss (B) und der dritte Polanschluss (C) der dreipoligen Schaltung (5) vorgesehen sind.

17. Gleichrichterschaltung nach Anspruch 9, wobei die dreipolige Schaltung (5) mit dem ersten Polanschluss (A) jeweils mit einer Seite von zwei Injektionskondensatoren (Cₕ₃ₚ, Cₕ₃ₙ) verbunden ist, welche Verbindung den Mittelpunkt (M) der dreipoligen Schaltung (5) bildet, wobei die beiden anderen Seiten der Injektionskondensatoren (Cₕ₃ₚ,Cₕ₃ₙ) über eine Spannungsquelle (Uₓ) verbunden sind und Anschlusspunkte (M_{P},M_{N}) bilden, wobei jeweils von den Anschlusspunkten (M_{P},M_{N}) ausgehend eine Stromschleife mit je einem Pufferkondensator (C_{CP},C_{CN}) und jeweils ein Paar von steuerbaren Halbleiterventilen (S_{cp+},S_{cp-},S_{cn+},S_{cn-}) vorgesehen ist, und zwischen den jeweils zwei steuerbaren Halbleiterventilen (S_{cp+},S_{cp-},S_{cn+},S_{cn-}) eines Paares der zweite Polanschluss (B) und der dritte Polanschluss (C) vorgesehen ist.

18. Verfahren zum Einprägen von Steuerströmen (i_{cp},i_{cn}) in einen drei Schaltelemente (S1, S2, S3) und eine dreipolige Schaltung (5) umfassenden gleichstromseitigen Ausgang (4) einer Gleichrichterschaltung gemäß Anspruch 1 mit einer dreiphasigen sechs-pulsigen Gleichrichtanordnung (1) von Halbleiterventilen (2), vorzugsweise eine dreipolige Brückengleichrichterschaltung von Dioden, mit einer Last (6), wobei ein Injektionsstrom (iₕ₃) von zumindest einer der drei Phasen (U,V,W) an einem netzseitigen Eingang (3) der Gleichrichterschaltung abgezweigt wird, **dadurch gekennzeichnet, dass** der Injektionsstrom (iₕ₃) einem ersten Polanschluss (A) der dreipoligen Schaltung (5) zugeführt wird, und eine aktive, voneinander unabhängige Regelung von zumindest zwei der durch Steuerströme (i_{cp},i_{cn}) und Injektionsstrom (iₕ₃) gegebenen drei Ströme (i_{cp},i_{cn},iₕ₃) zur Erzeugung sinusförmiger Gleichrichtereingangsströme mithilfe von aktiven Bauelementen, vorzugsweise steuerbaren Halbleiterventilen (S_{cp+},S_{cp-},S_{cn+},S_{cn-}), in der dreipoligen Schaltung (5) erfolgt, wobei die Zuführung des Injektionsstroms nur in diejenige Phase erfolgt, die aufgrund des Betriebes der sechs-pulsigen Gleichrichtanordnung stromlos bleibt, sowie den Gleichrichterströmen (iₚ,iₙ) an zwei gleichstromseitigen Ausgangsleitungen (P_{DC},N_{DC}) des gleichstromseitigen Ausganges (4) jeweils ein Steuerstrom (i_{cn},i_{cp}) über einen zweiten und dritten Polanschluss (B,C) der dreipoligen Schaltung (5) hinzugefügt wird, und einer der Gleichrichterströme (iₚ,iₙ) mit dem ihm jeweils zugeführten Steuerstrom (i_{cn},i_{cp}) durch eine zwischen dem zweiten Polanschluss (B) und der Last (6) oder zwischen dem dritten Polanschluss (C) und der Last (6) am gleichstromseitigen Ausgang (4) angeordnete Drossel (7) geführt wird.

19. Verfahren zum Einprägen von Steuerströmen (i_{cp},i_{cn}) nach Anspruch 18, **dadurch gekennzeichnet, dass** der Injektionsstrom (iₕ₃) und/oder die Steuerströme (i_{cp},i_{cn}) durch zumindest zwei von drei Induktivitäten (Lₕ₃,L_{cp},L_{cn}), vorgesehen an zumindest zwei der drei Polanschlüsse (A,B,C) zur Glättung und Steuerung der Ströme (iₕ₃,i_{cp},i_{cn}), durch Differenzspannungen (U_{L3},U_{Ln},U_{Lp}) über den Induktivitäten (Lₕ₃,L_{cp},L_{cn}) geführt werden, sowie mittels Regelung von zwei der drei Ströme (iₕ₃,i_{cn},i_{cp}) der dritte Strom (iₕ₃,i_{cn},i_{cp}) eingestellt wird.

20. Verfahren zum Einprägen von Steuerströmen (i_{cp},i_{cn}) nach einem der Ansprüche 18 bis 19 mit einer Gleichrichterschaltung nach einem der Ansprüche 7,8 oder 12 bis 17, **dadurch gekennzeichnet, dass** eine Mittelpunktspannung (U_{MN}) zwischen dem Mittelpunkt (M) der dreipoligen Schaltung (5) und einem Neutralpunkt (N) gemessen wird und ein Mittelwert der Mittelpunktspannung (U_{MN}) mit einem der Konvertersysteme (9,10,11) geregelt wird.

21. Verfahren zum Einprägen von Steuerströmen (i_{cp},i_{cn}) nach Anspruch 20, **dadurch gekennzeichnet, dass** der Mittelwert der Mittelpunktspannung (U_{MN}) auf null geregelt wird.

22. Verfahren zum Einprägen von Steuerströmen (i_{cp},i_{cn}) nach Anspruche 20 oder 21 mit einer Gleichrichterschaltung nach einem der Ansprüche 13 bis 17, **dadurch gekennzeichnet, dass** eine erste Pufferkondensatorspannung (U_{CP}) am Pufferkondensator (C_{CP}) größer geregelt wird als eine Spannung der positiven Ausgangsleitung (P_{DC}) gegen einen Neutralpunkt (N), und eine zweite Pufferkondensatorspannung (U_{CN}) am Pufferkondensator (C_{CN}) kleiner geregelt wird als eine Spannung der negativen Ausgangsleitung (N_{DC}) gegen dem Neutralpunkt (N).

23. Verfahren zum Einprägen von Steuerströmen (i_{cp},i_{cn}) nach einem der Ansprüche 20 bis 22, **dadurch gekennzeichnet, dass** die Regelung des Mittelwerts der Mittelpunktspannung (U_{MN}) mittels der steuerbaren Halbleiterventile (S_{cp+},S_{cp-},S_{cn+},S_{cn-}, Sₕ₃₊,Sₕ₃₋) erfolgt.

24. Verfahren zum Einprägen von Steuerströmen (i_{cp},i_{cn}) nach Anspruch 19 bis 23 mit einer Gleichrichterschaltung nach Anspruch 15, **dadurch gekennzeichnet, dass** eine erste Pufferkondensatorspannung (U_{CP}) am Pufferkondensator (C_{CP}) minimiert wird, und eine zweite Pufferkondensatorspannung (U_{CN}) am Pufferkondensator (C_{CN}) minimiert wird, wobei die Mittelpunktspannung (U_{MN}) auf den negativen halben Wert einer Injektionsspannung (Uₕ₃) geregelt wird, und die Injektionsspannung (Uₕ₃) zwischen dem ersten Polanschluss (A) und dem Neutralpunkt (N) anliegt.

25. Verfahren zum Einprägen von Steuerströmen (i_{cp},i_{cn}) nach einem der Ansprüche 19 bis 24 mit einer Gleichrichterschaltung nach Anspruch 11 oder 17, **dadurch gekennzeichnet, dass** mithilfe der Regelung der Spannungsquelle (Uₓ) das Potential der Mittelpunktspannung (U_{MN}) gegenüber einer der beiden Ausgangsleitungen (P_{DC},N_{DC}) erhöht bzw. erniedrigt wird.

## Claims

1. Rectifier circuit having a three-phase, six-pulse rectifier arrangement (1) of semiconductor valves (2), preferably a bridge rectifier circuit of diodes, with a load (6), wherein the rectifier arrangement (1) has a three-phase mains-side input (3) and a DC-side output (4) comprising three switching elements (S1, S2, S3) and a three-pole circuit (5), and each phase (U, V, W) of the mains-side input (3) can be respectively connected to a switching element (S₁, S₂, S₃) to form a first pole connection (A) of the three-pole circuit (5) for diverting an injection current (iₕ₃) into the three-pole circuit (5), and a second and third pole connection (B, C) of the three-pole circuit (5) is respectively connected to an output line (P_{DC}, N_{DC}) of the DC-side output (4) for control currents (i_{cp}, i_{cn}), wherein the three-pole circuit (5) is configured as a regulating circuit for actively regulating, independently of one another, at least two of the three currents (i_{cp}, i_{cn}, iₕ₃) given by control currents (i_{cp}, i_{cn}) and injection current (iₕ₃) so as to generate sinusoidal rectifier input currents and has controllable semiconductor valves (S_{cp+}, Sₑₚ₋, Sₑₙ₊, S_{cn-}), preferably IGBTs, for actively regulating two of the three currents (i_{cp}, i_{cn}, iₕ₃) given by control currents (i_{cp}, i_{cn}) and injection current (iₕ₃), and a choke (7) is arranged on one of the output lines (P_{DC}, N_{DC}) of the DC-side output (4) between the second pole connection (B) and the load (6) or between the third pole connection (C) and the load (6) on the DC-side output (4), and the load (6) on the DC-side output (4) is a time-variable load (6), wherein the regulating circuit is configured to supply the injection current only in the phase that remains currentless due to operation of the six-pulse rectifier arrangement.

2. Rectifier circuit according to claim 1, wherein the second and third pole connection (B, C) of the three-pole circuit (5) is respectively connected to one of the two output lines (P_{DC}, N_{DC}) of the DC-side output (4) via a second and third inductor (L_{cp}, L_{cn}).

3. Rectifier circuit according to claim 2, wherein the first pole connection (A) is connected to the switching elements (S1, S2, S3) via a first inductor (Lₕ₃), wherein the three inductors (Lₕ₃, L_{cp}, L_{cn})are formed by a three-leg choke.

4. Rectifier circuit according to any one of claims 1 to 3, wherein the two output lines (P_{DC}, N_{DC}) on the DC-side output (4) are connected to an output capacitor (C₀).

5. Rectifier circuit according to any one of claims 1 to 4, wherein each of the three phases (U, V, W) on the mains-side input (3) is respectively connected to a filter capacitor (C_{F}), wherein the filter capacitors (C_{F}) are star-connected together at a star point (M_{CF}).

6. Rectifier circuit according to any one of claims 1 to 5, wherein the three-pole circuit (5) is connected to the mains-side input (3) via at least one bypass capacitor (C_{BF}).

7. Rectifier circuit according to any one of claims 1 to 6, wherein the three-pole circuit comprises three converter systems (9, 10, 11) with controllable semiconductor valves (Sₑₚ₊, Sₑₚ₋, Sₑₙ₊, Sₑₙ₋) and/or a bidirectional switch (Sₕ₃) , preferably arranged in a bridge structure, wherein the first pole connection (A) of the three-pole circuit (5) is provided on a first converter system (9), the second pole connection (B) of the three-pole circuit (5) is provided on a second converter system (10), and the third pole connection (C) of the three-pole circuit (5) is provided on a third converter system (11), and a connection to a branching point, a common centre point (M) of the three-pole circuit (5), is provided from all three converter systems (9, 10, 11).

8. Rectifier circuit according to claim 7, wherein the first converter system (9) is provided as a three-level bridge branch, wherein the second and third converter system (10, 11) are provided as a half-bridge, and the three converter systems (9, 10, 11) are formed by three parallel-connected branches (Z₁, Z₂, Z₃) equipped with electronic components, wherein the first pole connection (A) of the three-pole circuit (5) is formed on a first branch (Z₁), and the second and third pole connection (B, C) are formed on a third branch (Z₃), and each of the branches (Z₁, Z₂, Z₃) has a centre point connection (M₁, M₂, M₃), around which centre point connections (M₁, M₂, M₃) the components of the branches (Z₁, Z₂, Z₃) are symmetrically arranged, wherein a first centre point connection (M₁) of the first branch (Z₁) is connected to a second centre point connection (M₂) of the second branch (Z₂) via a bidirectional switch (Sₕ₃), and the second centre point connection (M₂) is conductively connected directly to a third centre point connection (M₃) of the third branch (Z₃), wherein the third centre point connection (M₃) is provided as the centre point (M) of the three-pole circuit (5).

9. Rectifier circuit according to any one of claims 1 to 6, wherein the three-pole circuit comprises two converter systems (10, 11) with controllable semiconductor valves (S_{cp+}, S_{cp-}, S_{cn+}, S_{cn-}), preferably arranged in a bridge structure, wherein the second pole connection (B) of the three-pole circuit (5) is provided on a second converter system (10), and the third pole connection (C) of the three-pole circuit (5) is provided on a third converter system (11), and a connection to a branching point, a common centre point (M) of the three-pole circuit (5), is provided from both converter systems (10, 11), and the centre point (M) is connected to the first pole connection (A).

10. Rectifier circuit according to claim 9, wherein the second and third converter system (10, 11) are provided as a half-bridge, wherein the two converter systems (10, 11) are formed by two parallel-connected branches (Z₂, Z₃), and the first pole connection (A) of the three-pole circuit (5) is connected to a second branch (Z₂), and the second and third pole connection (A, B) are formed on a third branch (Z₃), and each of the branches (Z₂, Z₃) has a centre point connection (M₂, M₃), around which centre point connections (M₂, M₃) the components of the branches (Z₂, Z₃) are symmetrically arranged, and a second centre point connection (M₂) of the second branch (Z₂) is conductively connected directly to a third centre point connection (M₃) of the third branch (Z₃), wherein the third centre point connection (M₃) is provided as the centre point (M) of the three-pole circuit (5).

11. Rectifier circuit according to claim 10, wherein the second centre point connection (M₂) is connected to the first pole connection (A) via a voltage source (Uₓ).

12. Rectifier circuit according to claim 8, wherein two bridge valves (Dₕ₃₊, Dₕ₃₋), preferably diodes, are connected in series with the same conducting direction in the first branch (Z₁), wherein the first centre point connection (M₁) is arranged between the two bridge valves (Dₕ₃₊, Dₕ₃₋).

13. Rectifier circuit according to claim 8 or 10, wherein two buffer capacitors (C_{CP}, C_{CN}) are connected in series on the second branch (Z₂), wherein the second centre point connection (M₂) is arranged between the two buffer capacitors (C_{CP}, C_{CN}).

14. Rectifier circuit according to any one of claims 8 or 10, wherein the four controllable semiconductor valves (S_{cp+}, S_{cp-}, S_{cn+}, S_{cn-})are provided on the third branch (Z₃) in a manner connected in series, wherein the centre point (M) of the three-pole circuit (5) is arranged in the connection between two series-connected pairs of the controllable semiconductor valves (S_{cp+}, S_{cp-}, S_{cn+}, S_{cn-}), and the second pole connection (B) is provided between the controllable semiconductor valves (S_{cp+}, S_{cp-}) of the first pair, and the third pole connection (C) is provided between the controllable semiconductor valves (S_{cn+}, S_{cn-})of the second pair.

15. Rectifier circuit according to claim 12, wherein the two bridge valves (Dₕ₃₊, Dₕ₃₋) are configured as controllable semiconductor valves (Sₕ₃₊, Sₕ₃₋), preferably IGBTs.

16. Rectifier circuit according to claim 9, wherein the second and third converter system (10, 11) of the three-pole circuit (5) are formed with bidirectional three-level bridge branches which are known per se, preferably two so-called three-level neutral-point-clamped converters (3L-NPCs), wherein the three-level bridge branches are arranged symmetrically around a centre point branch (Zm) connected in parallel with the three-level bridge branches, and the centre point branch (Zm) is configured as two series-connected buffer capacitors (C_{CP}, C_{CN}), and the centre point (M) is provided between the two buffer capacitors (C_{CP}, C_{CN}), and a neutral connection (N₃) of the three-level bridge branch is connected to the centre point (M) and to the first pole connection (A), and an AC voltage connection (AC₈) of the three-level bridge branch are provided respectively as the second pole connection (B) and the third pole connection (C) of the three-pole circuit (5).

17. Rectifier circuit according to claim 9, wherein the three-pole circuit (5) is connected by the first pole connection (A) respectively to one side of two injection capacitors (Cₕ₃ₚ, Cₕ₃ₙ), which connection forms the centre point (M) of the three-pole circuit (5), wherein the two other sides of the injection capacitors (Cₕ₃ₚ, Cₕ₃ₙ) are connected via a voltage source (Uₓ) and form connection points (M_{P}, M_{N}), wherein, starting from each of the connection points (M_{P}, M_{N}), a current loop is provided which in each case has a buffer capacitor (C_{CP}, C_{CN}) and a pair of controllable semiconductor valves (S_{cp+}, S_{cp-}, S_{cn+}, S_{cn-}), and the second pole connection (B) and the third pole connection (C) is provided between the respective two controllable semiconductor valves (S_{cp+}, S_{cp-}, S_{cn+}, S_{cn-})of a pair.

18. Method for impressing control currents (i_{cp}, i_{cn}) in a DC-side output (4), which comprises three switching elements (S1, S2, S3) and a three-pole circuit (5), of a rectifier circuit according to claim 1 having a three-phase, six-pulse rectifier arrangement (1) of semiconductor valves (2), preferably a three-pole bridge rectifier circuit of diodes, with a load (6), wherein an injection current (iₕ₃) is branched off from at least one of the three phases (U, V, W) on a mains-side input (3) of the rectifier circuit, **characterized in that** the injection current (iₕ₃) is supplied to a first pole connection (A) of the three-pole circuit (5), and at least two of the three currents (i_{cp}, i_{cn}, iₕ₃) given by control currents (i_{cp}, i_{cn}) and injection current (iₕ₃) are actively regulated independently of one another by means of active components, preferably controllable semiconductor valves (S_{cp+}, S_{cp-}, Sₑₙ₊, S_{cn-}), in the three-pole circuit (5) so as to generate sinusoidal rectifier input currents, wherein the injection current is supplied only in the phase that remains currentless due to operation of the six-pulse rectifier arrangement, and a control current (i_{cn}, i_{cp}) is respectively added to the rectifier currents (iₚ, iₙ) on two DC-side output lines (P_{DC}, N_{DC}) of the DC-side output (4) via a second and third pole connection (B, C) of the three-pole circuit (5), and one of the rectifier currents (iₚ, iₙ) with the control current (i_{cn}, i_{cp}) respectively supplied thereto is guided through a choke (7) arranged between the second pole connection (B) and the load (6) or between the third pole connection (C) and the load (6) on the DC-side output (4).

19. Method for impressing control currents (i_{cn}, i_{cp}) according to claim 18, **characterized in that** the injection current (iₕ₃) and/or the control currents (i_{cp}, i_{cn}) are guided through at least two of three inductors (Lₕ₃, L_{cp}, L_{cn}), provided on at least two of the three pole connections (A, B, C) for smoothing and controlling the currents (iₕ₃, i_{cn}, i_{cn}), by differential voltages (U_{L3}, U_{Ln}, U_{Lp}) across the inductors (Lₕ₃, L_{cp}, L_{cn}), and the third current (iₕ₃, i_{cn}, i_{cp}) is set by regulating two of the three currents (iₕ₃, i_{cn}, i_{cp}).

20. Method for impressing control currents (i_{cn}, i_{cp}) according to any one of claims 18 to 19 using a rectifier circuit according to any one of claims 7, 8 or 12 to 17, **characterized in that** a centre point voltage (U_{MN}) is measured between the centre point (M) of the three-pole circuit (5) and a neutral point (N), and a mean value of the centre point voltage (U_{MN}) is regulated using one of the converter systems (9, 10, 11).

21. Method for impressing control currents (i_{cn}, i_{cp}) according to claim 20, **characterized in that** the mean value of the centre point voltage (U_{MN}) is regulated to zero.

22. Method for impressing control currents (i_{cn}, i_{cp}) according to claim 20 or 21 using a rectifier circuit according to any one of claims 13 to 17, **characterized in that** a first buffer capacitor voltage (U_{CP}) across the buffer capacitor (C_{CP}) is regulated to be greater than a voltage of the positive output line (P_{DC}) against a neutral point (N), and a second buffer capacitor voltage (U_{CN}) across the buffer capacitor (C_{CN}) is regulated to be lower than a voltage of the negative output line (N_{DC}) against the neutral point (N).

23. Method for impressing control currents (i_{cn}, i_{cp}) according to any one of claims 20 to 22, **characterized in that** the regulation of the mean value of the centre point voltage (U_{MN}) takes place by means of the controllable semiconductor valves (S_{cp+}, S_{cp-}, S_{cn+}, S_{cn-}).

24. Method for impressing control currents (i_{cn}, i_{cp}) according to claim 19 to 23 using a rectifier circuit according to claim 15, **characterized in that** a first buffer capacitor voltage (U_{CP}) across the buffer capacitor (C_{CP}) is minimized, and a second buffer capacitor voltage (U_{CN}) across the buffer capacitor (C_{CN}) is minimized, wherein the centre point voltage (U_{MN}) is regulated to the negative half-value of an injection voltage (Uₕ₃) , and the injection voltage (Uₕ₃) is applied between the first pole connection (A) and the neutral point (N) .

25. Method for impressing control currents (i_{cn}, i_{cp}) according to any one of claims 19 to 24 using a rectifier circuit according to claim 11 or 17, **characterized in that** the potential of the centre point voltage (U_{MN}) relative to one of the two output lines (P_{DC}, N_{DC}) is increased or reduced through the regulation of the voltage source (Uₓ).

## Revendications

1. Circuit redresseur avec un agencement de redressement triphasé à six impulsions (1) de valves semi-conductrices (2), de préférence un circuit redresseur en pont de diodes, avec une charge (6), l'agencement de redressement (1) présentant une entrée triphasée côté réseau (3) et une sortie côté courant continu (4) comprenant trois éléments de commutation (S1, S2, S3) et un circuit tripolaire (5), et chaque phase (U, V, W) de l'entrée côté réseau (3) pouvant être reliée par un élément de commutation respectif (S1, S2, S3) à une première borne polaire (A) du circuit tripolaire (5) pour dissiper un courant d'injection (iₕ₃) dans le circuit tripolaire (5), et une deuxième et une troisième borne polaire (B, C) du circuit tripolaire (5) étant respectivement reliées à une ligne de sortie (P_{DC}, N_{DC}) de la sortie côté courant continu (4) pour des courants de commande (i_{cp}, i_{cn}) ,
dans lequel le circuit tripolaire (5) est conçu comme un circuit de régulation pour la régulation active, indépendante l'une de l'autre, d'au moins deux des trois courants (i_{cp}, i_{cn}, iₕ₃) donnés par les courants de commande (i_{cp}, i_{cn}) et le courant d'injection (iₕ₃) pour générer des courants d'entrée de redresseur sinusoïdaux, et présente des valves semi-conductrices commandables (S_{cp+}, S_{cp-}, S_{cn+}, S_{cn-}), de préférence des IGBT, pour la régulation active de deux des trois courants (i_{cp}, i_{cn}, iₕ₃) donnés par les courants de commande (i_{cp}, i_{cn}) et le courant d'injection (iₕ₃), et une bobine (7) est disposée à la sortie côté courant continu (4) sur une des lignes de sortie (P_{DC}, N_{DC}) de la sortie côté courant continu (4) entre la deuxième borne polaire (B) et la charge (6) ou entre la troisième borne polaire (C) et la charge (6), et la charge (6) à la sortie côté courant continu (4) est une charge (6) variable dans le temps, le circuit de régulation étant conçu pour amener le courant d'injection uniquement à la phase qui reste sans courant en raison du fonctionnement de l'agencement de redressement à six impulsions.

2. Circuit redresseur selon la revendication 1, dans lequel la deuxième et la troisième borne polaire (B, C) du circuit tripolaire (5) sont respectivement reliées à l'une des deux lignes de sortie (P_{DC}, N_{DC}) de la sortie côté courant continu (4) par l'intermédiaire d'une deuxième et d'une troisième inductance (L_{cp}, L_{cn}).

3. Circuit redresseur selon la revendication 2, dans lequel la première borne polaire (A) est reliée aux éléments de commutation (S1, S2, S3) par l'intermédiaire d'une première inductance (Lₕ₃), les trois inductances (Lₕ₃, L_{cp}, L_{cn})étant réalisées au moyen de bobines à trois branches.

4. Circuit redresseur selon l'une des revendications 1 à 3, dans lequel les deux lignes de sortie (P_{DC}, N_{DC}) à la sortie côté courant continu (4) sont reliées à un condensateur de sortie (Co) .

5. Circuit redresseur selon l'une des revendications 1 à 4, dans lequel chacune des trois phases (U, V, W) à l'entrée côté réseau (3) est reliée à un condensateur de filtrage respectif (C_{F}), les condensateurs de filtrage (C_{F}) étant interconnectés en étoile à un point neutre (M_{CF}).

6. Circuit redresseur selon l'une des revendications 1 à 5, dans lequel le circuit tripolaire (5) est relié à l'entrée côté réseau (3) par l'intermédiaire d'au moins un condensateur de dérivation (C_{BF}).

7. Circuit redresseur selon l'une des revendications 1 à 6, dans lequel le circuit tripolaire comprend trois systèmes convertisseurs (9, 10, 11) avec des valves semi-conductrices commandables (S_{cp+}, S_{cp-}, S_{cn+}, S_{cn-})et/ou un commutateur bidirectionnel (Sₕ₃), disposés de préférence en pont, la première borne polaire (A) du circuit tripolaire (5) étant prévue sur un premier système convertisseur (9), la deuxième borne polaire (B) du circuit tripolaire (5) sur un deuxième système convertisseur (10) et la troisième borne polaire (C) du circuit tripolaire (5) sur un troisième système convertisseur (11), et une liaison étant prévue entre les trois systèmes convertisseurs (9, 10, 11) et un point de ramification, un point médian commun (M) du circuit tripolaire (5).

8. Circuit redresseur selon la revendication 7, dans lequel le premier système convertisseur (9) est prévu sous la forme d'une branche de pont à trois niveaux, le deuxième et le troisième système convertisseur (10, 11) étant prévus sous la forme de demi-ponts et les trois systèmes convertisseurs (9, 10, 11) étant réalisés au moyen de trois branches connectées en parallèle (Z₁, Z₂, Z₃) qui sont équipées de composants électroniques, la première borne polaire (A) du circuit tripolaire (5) étant réalisée sur une première branche (Z₁), et la deuxième et la troisième borne polaire (B, C) étant réalisées sur une troisième branche (Z₃), et chacune des branches (Z₁, Z₂, Z₃) présentant une borne de point médian (M₁, M₂, M₃), autour de laquelle borne de point médian (M₁, M₂, M₃) les composants des branches (Z₁, Z₂, Z₃) sont disposés symétriquement, une première borne de point médian (M₁) de la première branche (Z₁) étant reliée à une deuxième borne de point médian (M₂) de la deuxième branche (Z₂) par l'intermédiaire d'un commutateur bidirectionnel (Sₕ₃) et la deuxième borne de point médian (M₂) étant reliée directement de manière conductrice à une troisième borne de point médian (M₃) de la troisième branche (Z₃), la troisième borne de point médian (M₃) étant prévue comme point médian (M) du circuit tripolaire (5).

9. Circuit redresseur selon l'une des revendications 1 à 6, dans lequel le circuit tripolaire comprend deux systèmes convertisseurs (10, 11) avec des valves semi-conductrices commandables (S_{cp+}, S_{cp-}, S_{cn+}, S_{cn-}), disposées de préférence en pont, la deuxième borne polaire (B) du circuit tripolaire (5) étant prévue sur un deuxième système convertisseur (10) et la troisième borne polaire (C) du circuit tripolaire (5) sur un troisième système convertisseur (11), et une liaison étant prévue entre les deux systèmes convertisseurs (10, 11) et un point de ramification, un point médian commun (M) du circuit tripolaire (5), et le point médian (M) étant relié à la première borne polaire (A).

10. Circuit redresseur selon la revendication 9, dans lequel le deuxième et le troisième système convertisseur (10, 11) sont prévus sous la forme d'un demi-pont, les deux systèmes convertisseurs (10, 11) étant réalisés au moyen de deux branches connectées en parallèle (Z₂, Z₃), et la première borne polaire (A) du circuit tripolaire (5) étant reliée à une deuxième branche (Z₂), et la deuxième et la troisième borne polaire (A, B) étant réalisées sur une troisième branche (Z₃), et chacune des branches (Z₂, Z₃) présentant une borne de point médian (M₂, M₃), autour de laquelle borne de point médian (M₂, M₃) les composants des branches (Z₂, Z₃) sont disposés symétriquement, et une deuxième borne de point médian (M₂) de la deuxième branche (Z₂) étant reliée directement de manière conductrice à une troisième borne de point médian (M₃) de la troisième branche (Z₃), la troisième borne de point médian (M₃) étant prévue comme point médian (M) du circuit tripolaire (5).

11. Circuit redresseur selon la revendication 10, dans lequel la deuxième borne de point médian (M₂) est reliée à la première borne polaire (A) par l'intermédiaire d'une source de tension (Uₓ).

12. Circuit redresseur selon la revendication 8, dans lequel deux valves de pont (Dₕ₃₊, Dₕ₃₋) , de préférence des diodes, sont connectées en série dans la première branche (Z₁) avec le même sens de passage, la première borne de point médian (M₁) étant disposée entre les deux valves de pont (Dₕ₃₊, Dₕ₃₋) .

13. Circuit redresseur selon la revendication 8 ou 10, dans lequel deux condensateurs tampons (C_{CP}, C_{CN}) sont connectés en série sur la deuxième branche (Z₂), la deuxième borne de point médian (M₂) étant disposée entre les deux condensateurs tampons (C_{CP}, C_{CN}).

14. Circuit redresseur selon l'une des revendications 8 ou 10, dans lequel les quatre valves semi-conductrices commandables (S_{cp+}, S_{cp-}, S_{cn+}, S_{cn-})sont connectées en série sur la troisième branche (Z₃), le point médian (M) du circuit tripolaire (5) étant disposé dans la liaison entre deux paires connectées en série des valves semi-conductrices commandables (S_{cp+}, S_{cp-}, S_{cn+}, S_{cn-}), la deuxième borne polaire (B) étant prévue entre les valves semi-conductrices commandables (S_{cp+}, S_{cp-}) de la première paire et la troisième borne polaire (C) étant prévue entre les valves semi-conductrices commandables (S_{cn+}, S_{cn-})de la deuxième paire.

15. Circuit redresseur selon la revendication 12, dans lequel les deux valves de pont (Dₕ₃₊, Dₕ₃₋) sont réalisées sous la forme de valves semi-conductrices commandables (Sₕ₃₊, Sₕ₃₋), de préférence d'IGBT.

16. Circuit redresseur selon la revendication 9, dans lequel le deuxième et le troisième système convertisseur (10, 11) du circuit tripolaire (5) sont réalisés sous la forme de branches de pont bidirectionnelles à trois niveaux connues en soi, de préférence de deux convertisseurs à trois niveaux clampés par le neutre (Three-Level Neutral-Point-Clamped-Converters 3L-NPC), les branches de pont à trois niveaux étant disposées symétriquement autour d'une branche de point médian (Zm) connectée en parallèle avec les branches de pont à trois niveaux, et la branche de point médian (Zm) étant réalisée sous la forme de deux condensateurs tampons (C_{CP}, C_{CN}) connectés en série, et le point médian (M) étant prévu entre les deux condensateurs tampons (C_{CP}, C_{CN}) et une borne neutre (N₈) de la branche de pont à trois niveaux étant reliée au point médian (M) et à la première borne polaire (A), et une borne de courant alternatif (AC₈) de la branche de pont à trois niveaux étant prévues respectivement comme deuxième borne polaire (B) et troisième borne polaire (C) du circuit tripolaire (5).

17. Circuit redresseur selon la revendication 9, dans lequel le circuit tripolaire (5) est relié par la première borne polaire (A) à un côté de chacun de deux condensateurs d'injection (Cₕ₃ₚ, Cₕ₃ₙ) , cette liaison formant le point médian (M) du circuit tripolaire (5), les deux autres côtés des condensateurs d'injection (Cₕ₃ₚ, Cₕ₃ₙ) étant reliés par l'intermédiaire d'une source de tension (Uₓ) et formant des points de connexion (M_{P}, M_{N}), une boucle de courant avec chaque fois un condensateur tampon (C_{CP}, C_{CN}) et une paire de valves semi-conductrices commandables (S_{cp+}, S_{cp-}, S_{cn+}, S_{cn-}) étant prévue à partir de chacun des points de connexion (M_{P}, M_{N}), et la deuxième borne polaire (B) et la troisième borne polaire (C) étant prévues respectivement entre les deux valves semi-conductrices commandables (S_{cp+}, S_{cp-}, S_{cn+}, S_{cn-}) d'une paire.

18. Procédé pour appliquer des courants de commande (i_{cp}, i_{cn}) à une sortie côté courant continu (4), comprenant trois éléments de commutation (S1, S2, S3) et un circuit tripolaire (5), d'un circuit redresseur selon la revendication 1 avec un agencement de redressement triphasé à six impulsions (1) de valves semi-conductrices (2), de préférence un circuit redresseur en pont tripolaire de diodes, avec une charge (6), dans lequel un courant d'injection (iₕ₃) est prélevé sur au moins une des trois phases (U, V, W) à une entrée côté réseau (3) du circuit redresseur, **caractérisé en ce que** le courant d'injection (iₕ₃) est amené à une première borne polaire (A) du circuit tripolaire (5), et une régulation active, indépendante l'une de l'autre, d'au moins deux des trois courants (i_{cp}, i_{cn}, iₕ₃) donnés par les courants de commande (i_{cp}, i_{cn}) et le courant d'injection (iₕ₃) pour générer des courants d'entrée de redresseur sinusoïdaux à l'aide de composants actifs, de préférence des valves semi-conductrices commandables (S_{cp+}, S_{cp-}, S_{cn+}, S_{cn-}), dans le circuit tripolaire (5), le courant d'injection étant amené uniquement à la phase qui reste sans courant en raison du fonctionnement de l'agencement de redressement à six impulsions, et un courant de commande (i_{cn}, i_{cp}) étant respectivement ajouté aux courants de redresseur (iₚ, iₙ) sur deux lignes de sortie côté courant continu (P_{DC}, N_{DC}) de la sortie côté courant continu (4) par l'intermédiaire d'une deuxième et d'une troisième borne polaire (B, C) du circuit tripolaire (5), et l'un des courants de redresseur (iₚ, iₙ) avec le courant de commande (i_{cn}, i_{c}p) qui lui a été respectivement ajouté étant conduit à travers une bobine (7) disposée à la sortie côté courant continu (4) entre la deuxième borne polaire (B) et la charge (6) ou entre la troisième borne polaire (C) et la charge (6).

19. Procédé pour appliquer des courants de commande (i_{cp}, i_{cn}) selon la revendication 18, **caractérisé en ce que** le courant d'injection (iₕ₃) et/ou les courants de commande (i_{cp}, i_{cn}) sont conduits à travers au moins deux des trois inductances (Lₕ₃, L_{cp}, L_{cn})prévues sur au moins deux des trois bornes polaires (A, B, C) pour lisser et commander les courants (iₕ₃, i_{cp}, i_{cn}), par des tensions différentielles (U_{L3}, U_{Ln}, U_{Lp}) aux bornes des inductances (Lₕ₃, L_{cp}, L_{cn}), et le troisième courant (iₕ₃, i_{cn}, i_{cp}) est réglé au moyen de la régulation de deux des trois courants (iₕ₃, i_{cp}, i_{cn}) .

20. Procédé pour appliquer des courants de commande (i_{cp}, i_{cn}) selon l'une des revendications 18 à 19 avec un circuit redresseur selon l'une des revendications 7, 8 ou 12 à 17, **caractérisé en ce qu'**une tension de point médian (U_{MN}) entre le point médian (M) du circuit tripolaire (5) et un point neutre (N) est mesurée et une valeur moyenne de la tension de point médian (U_{MN}) est régulée avec l'un des systèmes convertisseurs (9, 10, 11).

21. Procédé pour appliquer des courants de commande (i_{cp}, i_{cn}) selon la revendication 20, **caractérisé en ce que** la valeur moyenne de la tension de point médian (U_{MN}) est régulée à zéro.

22. Procédé pour appliquer des courants de commande (i_{cp}, i_{cn}) selon les revendications 20 ou 21 avec un circuit redresseur selon l'une des revendications 13 à 17, **caractérisé en ce qu'**une première tension de condensateur tampon (U_{CP}) au condensateur tampon (C_{CP}) est régulée à une valeur plus élevée qu'une tension de la ligne de sortie positive (P_{DC}) par rapport à un point neutre (N), et une deuxième tension de condensateur tampon (U_{CN}) au condensateur tampon (C_{CN}) est régulée à une valeur plus petite qu'une tension de la ligne de sortie négative (N_{DC}) par rapport au point neutre (N).

23. Procédé pour appliquer des courants de commande (i_{cp}, i_{cn}) selon l'une des revendications 20 à 22, **caractérisé en ce que** la valeur moyenne de la tension de point médian (U_{MN}) est régulée au moyen des valves semi-conductrices commandables (S_{cp+}, S_{cp-}, S_{cn+}, S_{cn-}, Sₕ₃₊, Sₕ₃-).

24. Procédé pour appliquer des courants de commande (i_{cp}, i_{cn}) selon les revendications 19 à 23 avec un circuit redresseur selon la revendication 15, **caractérisé en ce qu'**une première tension de condensateur tampon (U_{CP}) au condensateur tampon (C_{CP}) est minimisée et qu'une deuxième tension de condensateur tampon (U_{CN}) au condensateur tampon (C_{CN}) est minimisée, la tension de point médian (U_{MN}) étant régulée à la demi-valeur négative d'une tension d'injection (Uₕ₃), et la tension d'injection (Uₕ₃) étant présente entre la première borne polaire (A) et le point neutre (N).

25. Procédé pour appliquer des courants de commande (i_{cp}, i_{cn}) selon l'une des revendications 19 à 24 avec un circuit redresseur selon la revendication 11 ou 17, **caractérisé en ce que**, à l'aide de la régulation de la source de tension (Uₓ), le potentiel de la tension de point médian (U_{MN}) est augmenté ou diminué par rapport à l'une des deux lignes de sortie (P_{DC}, N_{DC}).
